# EUROPEAN PATENT APPLICATION

(11) **EP 2 175 367 A2**
(43) Date of publication of application: **14.04.2010**
(21) Application number: 09171451.9
(22) Date of filing: 28.09.2009
(51) Int. Cl.: G06F 9/445, G06F 9/44, G06F 3/033, H04M 1/725

(54) **Method and apparatus for configurating idle screen of portable terminal**

(30) Priority: 02.10.2008 KR 20080097299
(71) Applicant: SAMSUNG ELECTRONICS CO., LTD., Suwon-si, Gyeonggi-do (KR)
(72) Inventor: Shin, Seung Woo, Gyeonggi-do (KR); Oh, Jung Yeob, Gyeonggi-do (KR); Lee, Myeong Lo, Gyeonggi-do (KR); Kim, Yu Ran, Gyeonggi-do (KR); Kim, Kyung Hwa, Gyeonggi-do (KR)
(74) Representative: Boakes, Jason Carrington

(57) **Abstract**

The present invention relates to a method and apparatus for configuring a idle screen of a portable terminal which is capable of adaptively configuring the idle screen according to the use mode of the portable terminal of a user based on a preset widget set. A method of configuring a idle screen of a portable terminal of the invention includes activating a widget set corresponding to a user request; fetching a widget configured in the widget set in an activation of the widget set; and configuring the idle screen by the fetched widget.

## Description

### BACKGROUND OF THE INVENTION

### FIELD OF THE INVENTION

Exemplary embodiments of the present invention relate to a display device including a display unit, and more particularly, to a method and apparatus for configuring a screen of a display device which is capable of adaptively changing the screen of the display device including at least one widget based on information of a preset group including at least one widget.

### DISCUSSION OF THE BACKGROUND

Recently, the trend in portable terminals is to develop them into multimedia devices which can provide various supplementary services, such as an electronic scheduler function, a game function, and a scheduling function. As the portable terminal supplies such various supplementary functions, a User Interface (UI) which enables the various supplementary functions to be more conveniently managed and used is indispensable.

Thus, several methods for enabling a user to more conveniently use the supplementary functions are proposed. Among the methods, a method of using a touch screen has been in the spotlight recently. The touch screen refers to a display device which is designed to execute a command or move the position of a cursor by a portable terminal through recognizing a contact position when a user touches the touch screen using his finger or a ball-shaped touch pen.

The touch screen can be operated according to various principles, such as a pressure-sensitive method of the touch screen reacting to pressure applied to its surface, an electrostatic method of detecting a contact position by checking lost charges, and an infrared method of detecting a contact position by checking the blocking of infrared rays.

Accordingly, many manufacturers have a growing interest in the touch screen, and research is being actively pursued to provide a more convenient UI and supplementary functions.

Moreover, a display device such as TV provides various supplementary services including web surfing, photo viewing, and game function in addition to a simple function of watching broadcasting. Furthermore, the display device essentially requires user interface (UI) which enables to easily manage and utilize supplementary services as it provides various supplementary services like the portable terminal. For example, there is a remote control that is configured to recognize motion or pointing by utilizing gyro sensors, acceleration sensors, IRLED, and an image sensor. To be sure, input methods using a touch-screen also can be applied.

### SUMMARY OF THE INVENTION

Exemplary embodiments of the present invention provide a method and apparatus for configuring a screen of a display device, which is capable of configuring the screen of a display device including widgets.

Exemplary embodiments of the present invention also provide a method and apparatus for configuring a screen of a display device which is capable of adaptively configuring the screen of a display device using a widget set which is previously configured.

Exemplary embodiments of the present invention further provide a method and apparatus for configuring a screen of a display device which is capable of configuring the screen of a display device more conveniently based on a widget set which is previously set.

Exemplary embodiments of the present invention further provide a method and apparatus for configuring the idle (standby) screen of a portable terminal, which is capable of configuring the idle screen of a portable terminal including widgets.

Exemplary embodiments of the present invention further provide a method and apparatus for configuring the idle screen of a portable terminal which is capable of adaptively configuring the idle screen of a portable terminal using a widget set which is previously configured.

Exemplary embodiments of the present invention further provide a method and apparatus for configuring the idle screen of a portable terminal which is capable of configuring the idle screen of a portable terminal more conveniently according to a mode set by a user based on a widget set which is previously set.

Exemplary embodiments of the present invention further provide a method of setting a widget set and using the widget set which is capable of overcoming the space limit of the screen in which widgets are arranged.

Exemplary embodiments of the present invention further provide a UI which can adaptively configure the screen using a widget set.

Additional features of the invention will be set forth in the description which follows, and in part will be apparent from the description, or may be learned by practice of the invention.

An exemplary embodiment of the present invention discloses a method of configuring a idle screen of a portable terminal including: activating a widget set corresponding to a user request; fetching a widget configured in the widget set in an activation of the widget set; and configuring the idle screen by the fetched widget.

An exemplary embodiment of the present invention also discloses a portable terminal that includes: a display unit that provides a first idle screen, and provides a second idle screen configured by a widget according to a widget set in an activation of the widget set; memory that stores widget set information corresponding to the widget set; and a controller that fetches a widget configured in the widget set in the activation of the widget set, and arranges the fetched widget to the second idle screen.

According to an exemplary embodiment of the present invention, a method of configuring a screen of a display device can include: activating a widget set in response to user's request; fetching a widget configured in the widget set in an activation of the widget set; and arranging the fetched widget in a screen of the display device. In accordance with an exemplary embodiment of the present invention, the method of configuring a screen of a display device can further include extracting widget set information corresponding to the widget set in the activation of the widget set, and the widget set information includes widget information for at least one widget and position information of a position where the at least one widget is placed on the screen of display device.

A display device according to an exemplary embodiment of the present invention can include: a display unit configured to provide a screen area comprising a widget according to a widget set in an activation of a widget set; a memory configured to store widget set information corresponding to the widget set; and a controller configured to fetch the widget configured in the widget set in the activation of the widget set corresponding to user's request, and to arrange the fetched widget on the screen area. The controller according to an exemplary embodiment of the present invention extracts widget set information corresponding to the widget set in the activation of the widget set, and the widget set information comprises widget information for at least one widget and position information of a position where the at least one widget is placed on the screen area of display device.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1A, FIG. 1B, and FIG. 1C illustrate widget functions provided by a portable terminal and a method of configuring the idle (standby) screen of the portable terminal.

FIG. 2A, FIG. 2B, and FIG. 2C illustrate a UI and a method of configuring the idle screen using a widget set according to an exemplary embodiment of the present invention.

FIG. 3 illustrates an operation for configuring the idle screen of a portable terminal according to an exemplary embodiment of the present invention.

FIG. 4A and FIG. 4B illustrate an example of a screen during the operation of configuring the idle screen with the fetch of a widget set according to an exemplary embodiment of the present invention.

FIG. 5A and FIG. 5B illustrate another example of a screen during the operation of configuring the idle screen with the fetch of a widget set according to an exemplary embodiment of the present invention.

FIG. 6 illustrates the operation of canceling the idle screen configured by the widget set according to an exemplary embodiment of the present invention.

FIG. 7A and FIG. 7B illustrate an example of a screen during the operation of canceling the idle screen configured by the widget set according to an exemplary embodiment of the present invention.

FIG. 8A and FIG. 8B illustrate another example of a screen during the operation of canceling the idle screen configured by the widget set according to an exemplary embodiment of the present invention.

FIG. 9 illustrates the operation of setting up and editing the widget set according to an exemplary embodiment of the present invention.

FIG. 10A and FIG. 10B illustrate an example of a screen during the operation of setting up and editing the widget set according to an exemplary embodiment of the present invention.

FIG. 11A and FIG. 11B illustrate another example of a screen during the operation of setting up and editing the widget set according to an exemplary embodiment of the present invention.

FIG. 12 illustrates the idle screen configuration operation according to employment of a widget set in a portable terminal according to an exemplary embodiment of the present invention.

FIG. 13 is a schematic block drawing of a portable terminal configuration according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element or layer is referred to as being "directly on" or "directly connected to" another element or layer, there are no intervening elements or layers present.

Exemplary embodiments of the present invention relate to a method and apparatus for configuring a idle (standby) screen of a display device which is capable of adaptively configuring a screen of the display device based on a widget set information. In particular, in the exemplary embodiments of the present invention, a portable terminal is described as a typical example of display device.

However, the present invention is not limited to the usage of the portable terminal, but can be applied to all types of display device including a display unit in accordance with the below exemplary embodiments of the present invention. In other words, the present invention includes all types of display device including a display unit that provides an output corresponding to an input of user, and such display devices can include medium to large display devices including TV, LFD (Large Format Display), DS (Digital Signage) and media pole, as well as a small display devices such as a portable terminal.

In addition, the display unit using a touch screen is described as a typical example. However, the display unit of the present invention is not limited to the touch screen, but can include all types of display unit that provides an output in response to user's input. In addition, in case the display unit is not operated by the touch screen, the user's input can be implemented with a keypad, a touch pad, and a remote control. In addition, the user's input can be implemented by an operation including a motion or a pointing of gyro sensors, acceleration sensors, IRLED, and image sensors.

Accordingly, in the exemplary embodiments of the present invention, a method and apparatus for configuring a idle screen of a portable terminal which is capable of adaptively configuring a idle screen of the portable terminal based on a widget set information. In particular, in the exemplary embodiments of the present invention, a portable terminal is described as a typical example of display device, and a touch screen configuration of the display unit of the portable terminal are described as typical examples. However, it is obvious that the invention is not limited to a portable terminal and a touch screen.

In an exemplary embodiment of the present invention, the term "widget set" refers to a group of widgets constituting a idle screen according to a usage mode of a portable terminal. The widget set information includes widget information and position information of at least one widget.

A user can configure at least one widget set comprising at least one widget, while a portable terminal creates widget set information by extracting widget information and position information of each widget in the widget set configured by the user. The widget set information can be provided as group information comprised of specific widgets in the portable terminal. Thus, a user can configure the widget set information based on identification information (e.g., a name, an icon, or an emoticon) which can be easily identified by the user. The portable terminal can provide the widget set information in the form of a group icon which is distinct from a typical widget icon so that widgets can be fetched more conveniently according to the widget set information.

The above-described widget is a small Graphical User Interface (GUI) tool used to display, on a screen, an execution result of an application operating on a computer operating system. The widget is displayed on a idle screen or the like in various forms and is configured to provide various functions. In particular, in the exemplary embodiments of the present invention, the widget indicates a mobile widget which is a small-sized application operating in a portable terminal and is configured to indicate a group of applications operating on a single widget engine.

The mobile widget can operate at any time on the idle screen of a portable terminal. Accordingly, on a UI for information access through the widget, a user can efficiently overcome the difficulties which are inherent in a portable terminal (e.g., a small-sized screen, the difficulty of inputting text through a keypad, a complicated information service use path, and a long time for a screen movement).

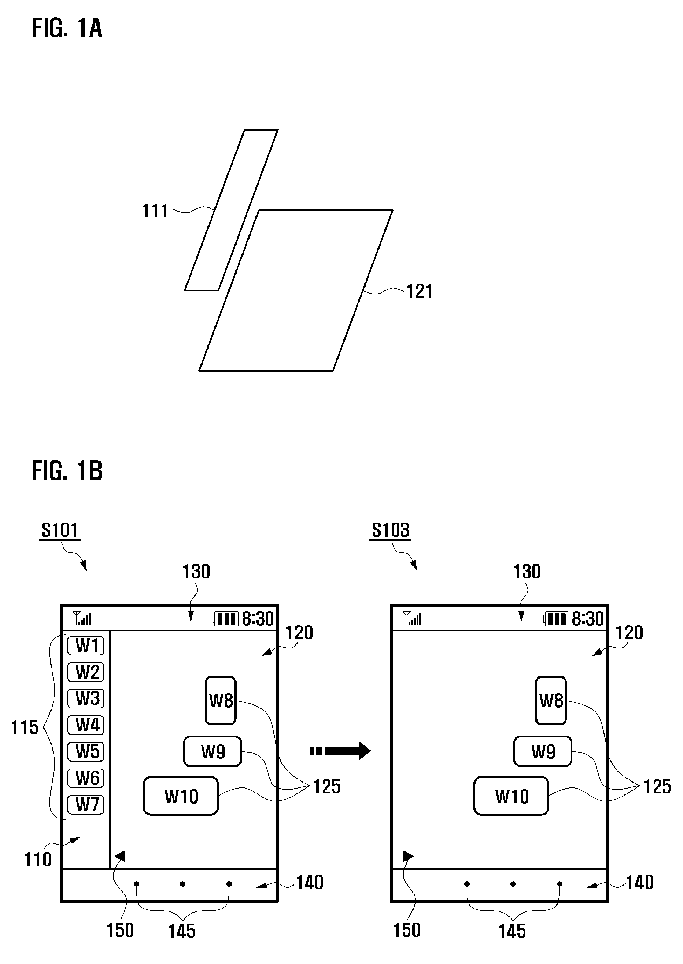

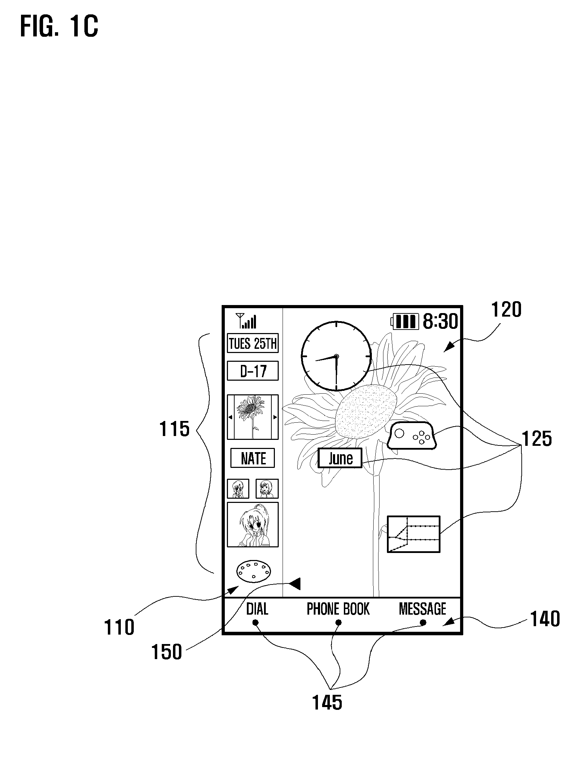

Hereinafter, a typical method of configuring a idle screen using widgets is described with reference to FIG. 1A, FIG. 1B, and FIG. 1C.

FIG. 1A, FIG. 1B, and FIG. 1C are drawings illustrating widget functions provided by a portable terminal and a method of configuring the idle screen of the portable terminal.

Referring to FIG. 1A, FIG. 1B, and FIG. 1C the touch screen of the portable terminal providing widgets includes a plurality of widget icons 115, a tray 110, a idle screen 120, an indicator 150, at least one submenu 145, a submenu display region 140, and an indicator region 130. Each of the widget icons 115 can fetch a widget capable of executing a set function. The tray 110 has a plurality of widget icons 115 arranged therein and enables a user to conveniently use the functions of the widgets included in the portable terminal. The idle screen 120 (i.e., a main display region of the touch screen of the portable terminal) displays screen data according to the execution of a widget in the idle state of the portable terminal. The indicator 150 can display or remove the tray 110. The submenu 145 enables a user to execute a portable terminal function or an option which may be frequently used. The submenu display region 140 displays the submenu 145. The indicator region 130 displays such information as a state of a coverage region, a remaining battery capacity, a time information of the portable terminal, an information of a state of an executed function of the portable terminal, and the like.

In particular, as shown in FIG. 1A, the touch screen of the portable terminal can be divided into a idle screen layer 121 providing the idle screen 120 and a tray layer 111 providing the tray 110 including the plurality of widget icons 115 on the idle screen 120. The idle screen 120 is formed in the idle screen layer 121 and can be the main screen of the touch screen of the portable terminal. In the idle screen 120, a user can indicate the execution of the function of a specific widget or visually check the execution result of a corresponding function. The idle screen 120 can display a specific image or a specific color according to a user's setting.

Referring to FIG. 1A, FIG. 1B, and FIG. 1C, specific widget icons 115 included in the tray 110 can be moved to the idle screen 120 in response to a user request, and the widgets 125 corresponding to the respective widget icons 115 can be executed and displayed. That is, when the widget icons 115 within the tray 110 are placed in the idle screen 120, functions of the specific widgets 125 corresponding to the respective widget icons 115 can be activated. The tray 110 is formed in the tray layer 111, and is a UI which has the plurality of widget icons 115 arranged therein and enables a user to conveniently use a specific widget 125 of the portable terminal. The tray 110 can have a horizontal or vertical form depending on whether the widget icons 115 are arranged in a horizontal or vertical direction.

FIG. 1A, FIG. 1B, and FIG. 1C illustrate exemplary embodiments in which the widget icons 115 are arranged in a vertical direction. The tray 110 can be placed on one side of the touch screen of the portable terminal and, as shown in FIG. 1A, can be formed in the tray layer 111 on the idle screen layer 121, which displays the idle screen 120.

Each of the widget icons 115 indicates a specific function included in the portable terminal in the form of a picture or symbol. A user can execute or check a widget function prior to executing, through a corresponding widget icon 115. The indicator 150 can be used to display or remove (hide) the tray 110 and can have a directivity corresponding to the display or removal. That is, the tray 110 cannot be directly displayed in the touch screen, but can be controlled to be displayed through the indicator 150. The indicator 150 can be displayed in the form of a symbol having directivity. In other words, the direction indicated by the indicator 150 can indicate a direction for the appearance (display) or removal (disappearance) of the tray 110. The direction of the indicator 150 can be switched to the opposite direction (180° rotation) corresponding to the appearance (display) or removal (disappearance) of the tray 110, and then displayed. Accordingly, a user can display or remove the tray 110 by performing input to the indicator 150.

The submenu 145 enables a user to execute the menu of the portable terminal which is frequently used with one touch. For example, the submenu 145 can include a plurality of submenu parts, such as a dial part to enable a user to directly send a signal, a telephone directory part to enable a user to search for telephone numbers stored in the portable terminal, a message part to enable a user to send a message or open a received message, a general menu part to enable a user to enter a general menu mode, an option part to enable a user to perform an option for a specific function. However, the submenu 145 can include or delete other submenu parts while retaining the listed submenu parts according to the user setting.

FIG. 1C is a drawing illustrating an exemplary embodiment in which the tray 110, the widget icons 115, the widgets 125, and the like of the stand-by screen 120, which can be displayed on the touch screen of the portable terminal shown in FIG. 1A and FIG. 1B are displayed on the touch screen.

As shown in FIG. 1C, the plurality of widget icons 115 can be arranged and displayed in a vertical direction in the tray 110. The functions of the portable terminal corresponding to the plurality of widget icons 115 included in the tray 110, as can be seen from FIG. 1C, can include a day of the week and a date, a D-day, a photo album, a wireless internet access game, and so on. Furthermore, referring to FIG. 1C, it can be seen that functions, such as a current time display widget and a subway route map display widget, are being executed in the idle screen 120.

As described above, a user can place a specific widget icon, from among the plurality of widget icons 115 included in the tray 110, on the idle screen 120 through input, such as drag and drop, and activate a function corresponding to the specific widget icon. Such a idle screen configuration enables a user to use the functions of the portable terminal more conveniently.

The widget 125 may be content having a close relationship with the user's environment in which the portable terminal is used since, as described above, the user opens the widget 125 at any time in the idle screen 120 of the portable terminal and frequently uses it. Accordingly, the widget 125 may be intuitively provided to the user according to a usage mode, such as the place where the user uses the portable terminal, the life pattern of the portable terminal used by the user, the user's field of interest (health, beauty, culture, stocks, sports, education, or the like).

However, the above-described method of using the widgets 125 has a space limit since the size of the display device of a portable terminal is limited. That is, the idle screen 120 of a portable terminal where the widgets 125 are placed is limited. Thus, there is the inconvenience that the user selects the widgets 125 according to the specific environment every time the environment changes. For example, widgets 125 can differ according to a user's specific environment, such as a widget 125 chiefly used at home and another widget 125 chiefly used at school or work. The above method does not take a user's specific environment into consideration. Thus, the inconvenience that the user must select a widget 125 according to each environment and change the idle screen 120 every time the environment changes.

Accordingly, an exemplary embodiment of the present invention provides a method capable of overcoming a limit to the arrangement of widgets in configuring the idle screen resulting from a limited idle screen and the difficulty in configuring the idle screen for widgets according to the user's environment where the portable terminal is used. Exemplary embodiments of the present invention provide a suggestion of a widget set including one or more widgets, a method of configuring the idle screen using the widget set, and a controller for controlling the widget set.

In accordance with the method of configuring the idle screen using the widget set according to an exemplary embodiment of the present invention, a space limit to the idle screen of a portable terminal in which widgets will be arranged can be overcome, and a user can configure the widgets of a idle screen more conveniently according to his environment. Further, a user can edit and fetch the widget set more intuitively and conveniently.

Hereinafter, a UI provided by a portable terminal according to an exemplary embodiment of the present invention, exemplary embodiments of a screen corresponding to the UI, and an exemplary detailed operation performed in the portable terminal are described. However, the present invention is not limited to the following description and can be applied to various embodiments based on the following exemplary embodiments.

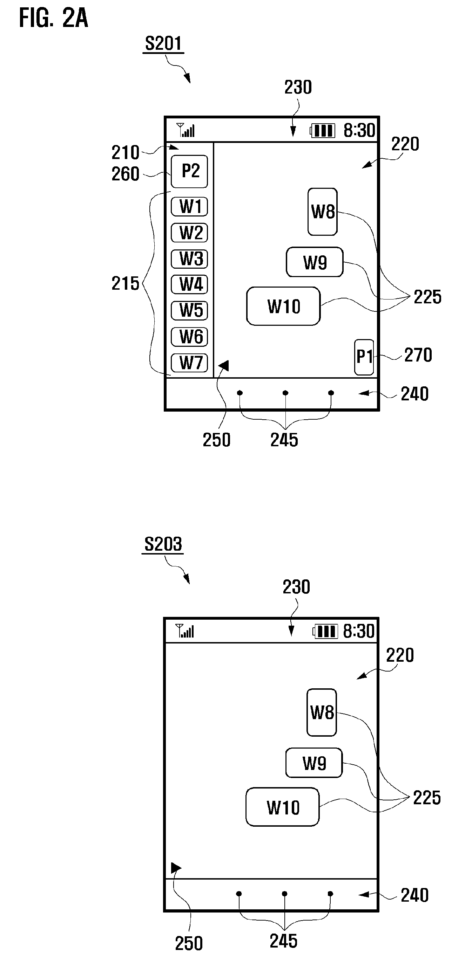

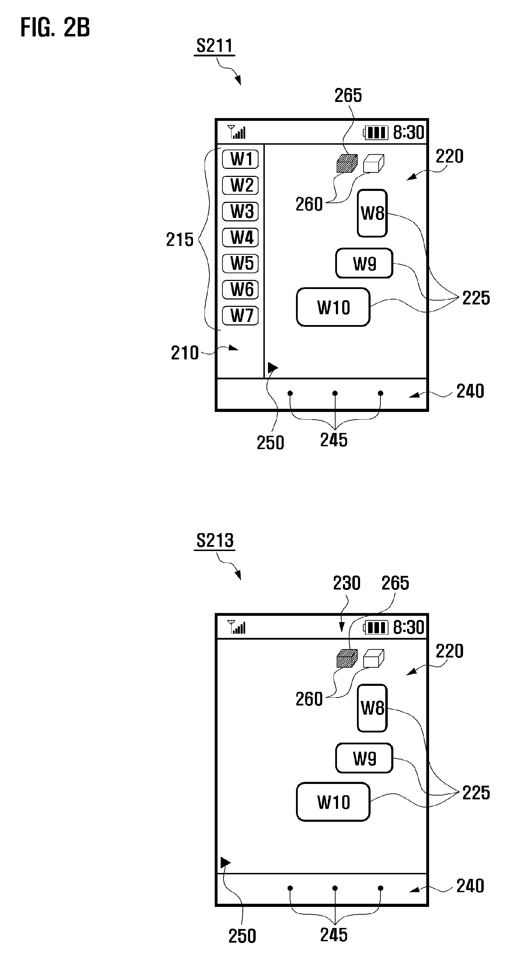

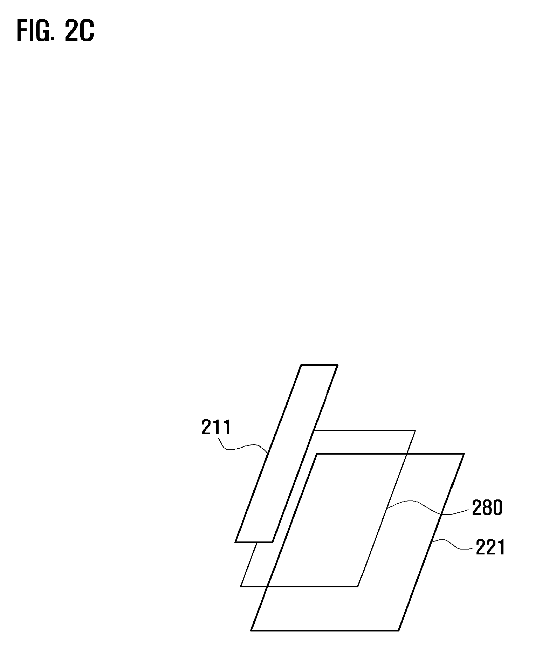

FIG. 2A, FIG. 2B, and FIG. 2C are drawings illustrating a UI and a method of configuring the idle screen of a portable terminal using a widget set according to an exemplary embodiment of the present invention.

In describing FIG. 2A, FIG. 2B, and FIG. 2C, repetition of the description of the configurations corresponding to FIG. 1A, FIG. 1B, and FIG. 1C is omitted, but the present exemplary embodiments can include all the configurations corresponding to FIG. 1A, FIG. 1B, and FIG. 1C.

Referring to FIG. 2A, the touch screen of a portable terminal providing widgets, includes: a plurality of widget icons 215; at least one widget set icon 260, which is previously set according to a user environment and includes at least one widget; a widget tray 210, which has the widget icons 215 and the at least one widget set icon 260 arranged therein and enables a user to conveniently use widget functions; a idle screen 220; an indicator region 230; a submenu 245; a submenu display region 240, which displays the submenu 245; and an indicator 250.

In particular, in the touch screen according to the exemplary embodiment of the present invention, as shown by reference numeral S201, the widget set icon 260 for executing a widget set exists in the widget tray 210, and a widget set ribbon 270 for informing the user of the activation state of a widget set can be included in the idle screen 220.

The widget set ribbon 270 corresponds to a widget set icon 260 corresponding to a widget set that is currently being activated. The widget set ribbon 270, as shown by reference numeral S203, can be removed from the idle screen 220 when the widget tray 210 is removed. The widget set icon 260 can have a form different from a typical widget icon. The widget set icons 260 existing in the widget tray 210 can be configured in various forms and manners according to a user setting.

Furthermore, in FIG. 2A, widgets 225 being displayed in the idle screen 220 each refer to a widget which is set in a specific widget set according to the user's selection. That is, the widgets 225 correspond to widgets which are fetched and arranged based on widget set information matching a specific widget set icon selected by a user, from among the one or more widget set icons 260 included in the widget tray 210. The user can recognize that the widgets 225 of the idle screen 220 are configured on the basis of the widget set based on the widget set ribbon 270 which appears when the widget tray 210 is displayed. The widget set ribbon 270 and a detailed operation using the same are described later.

FIG. 2B corresponds to the exemplary embodiment and configuration of FIG. 2A. However, unlike FIG. 2A, FIG. 2B shows an exemplary embodiment in which the widget set icons 260 are placed in the idle screen 220. In this embodiment, as shown by reference numeral S211, the widget set icons 260 can be omitted on the widget tray 210. That is, in the exemplary embodiment of FIG. 2B, the widget set icons 260 are not included in the widget tray 210. Furthermore, in the exemplary embodiment shown in FIG. 2B, reference numeral S211 shows an example of a screen where the widget tray 210 is displayed on the idle screen 220, and reference numeral S213 shows an example of a screen where the widget tray 210 is removed from the idle screen 220.

In the embodiment where the widget set icons 260 are placed in the idle screen 220 as shown in FIG. 2B, the widget set ribbon 270 shown in FIG. 2A can be omitted. In the exemplary embodiment of FIG. 2B, a function of the widget set ribbon 270, that is, a function denoting that the widgets 225 displayed in the idle screen 220 are configured according to the activation of a corresponding widget set can be indicated in a corresponding widget set icon which is now being activated, from among the widget set icons 260, through display such as highlight, as indicated by reference numeral 265. This function can be provided in various forms, such as a separately set icon, as well as the highlight display of the corresponding widget set icon 260.

The touch screen of the portable terminal according to the exemplary embodiment of the present invention, as shown in FIG. 2C, can be divided into a idle screen layer 221 providing the idle screen 220, a tray layer 211 providing the widget tray 210 which includes the widget icons 215 and/or the widget set icons 260 on the idle screen 220, and at least one widget set layer 280 providing configured widgets according to a widget set on the idle screen 220.

The widget set layer 280 can indicate on the idle screen 220 a widget set which is being activated, and provides a layer for giving a visual effect of a defined effect based on an operation, such as the activation and inactivation of the widget set. The visual effect, can be provided to display movements, for example, appearance, disappearance, or the like of widgets on the idle screen 220. The movements can be visual and intuitive, such as a movement of the widgets 225 on the idle screen 220 provided by a portable terminal to the widget set icon 260 on the widget tray 210 or on the idle screen 220, a movement of the widgets 225 within the widget set icon 260 to the idle screen 220, a movement of a specific widget icon on the widget tray 210 to the idle screen 220, or a movement of the widgets on the idle screen 220 to the widget tray 210. Such a visual effect can be used to display various states by giving various effects, such as a wave effect, a flame effect, a sequential disappearing effect, a slide effect, and a movement mark display effect.

Additional widget set layers 280 can be configured according to preset widget sets, or additional preset widget sets can be alternately provided in one widget set layer 280. In the widget set layer 280, when a widget set is fetched according to an exemplary embodiment of the present invention, at least one widget corresponding to the fetched widget set is outputted on the idle screen 220 through the widget set layer 280 as shown in FIG. 2A and FIG. 2B. Thus, in the case where at least one widget previously configured by a user using a typical method already exists on the idle screen 220, if the use of an activated widget set is completed, the previously configured widget appears on the idle screen 220 again. That is, when the use of a widget set is finished, the widget set layer 280 can disappear, and the idle screen layer 221 can appear.

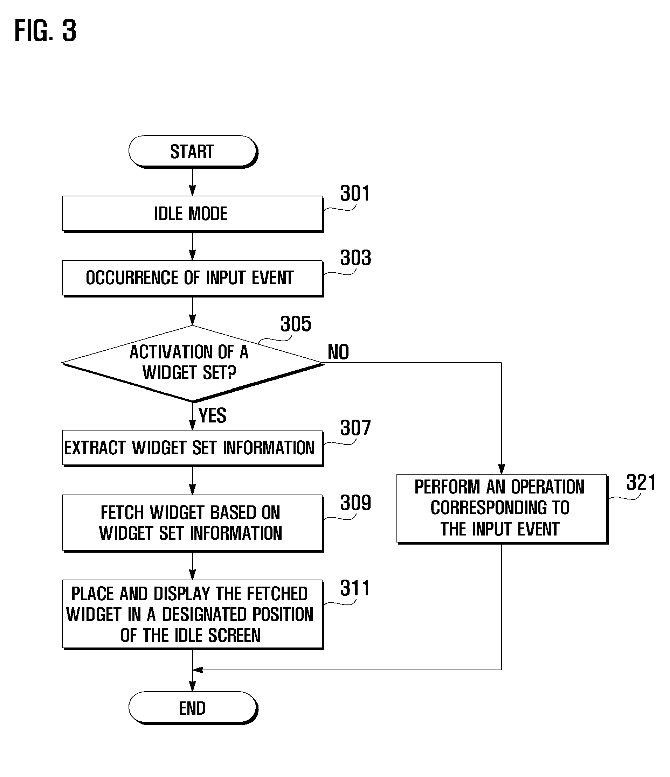

A method and apparatus for configuring the idle screen through the exemplary embodiment configurations of the present invention shown in FIG. 2A, FIG. 2B, and FIG. 2C are described below with reference to FIG. 3 to FIG. 13.

FIG. 3 is a drawing illustrating an operation for configuring the idle screen of a portable terminal according to another exemplary embodiment of the present invention.

Referring to FIG. 3, first, when detecting the occurrence of an input event by a user (303) in a standby mode (301), the portable terminal determines whether the input event is an input event requesting the execution of a widget set (305). The input event is an event generated on the touch screen of the exemplary embodiment, which can include events using various input modes which can be generated on the touch screen, such as a touch event, a tap event, a drag event, a flick event, and a swing event. In FIG. 3, the input event is an event for executing the widget set of the present invention and can be at least one event which is previously set among the events using the various input modes.

Whether the execution of the widget set is requested can be determined by checking whether the input event occurs in a widget set icon 260 configured on the widget tray 210 or the idle screen 220.

If the input event is an input event generated in places except the widget set icon 260, that is, an input event generated in a widget icon 215 on the widget tray 210, or a widget 225 on the idle screen 220, the portable terminal can perform an operation corresponding to the input event (321). For example, if the input event occurs in a specific widget 225 on the idle screen 220, the portable terminal can execute an application corresponding to the specific widget 225 or perform an operation pertinent to the specific widget 225. Alternatively, if the input event occurs in a specific widget icon 215 on the widget tray 210, the portable terminal can execute an application corresponding to the specific widget icon 215 according to the input event or can perform an operation for moving the specific widget icon 215 to the idle screen 220 and then execute an application corresponding to the corresponding widget 225.

If the input event occurs in the widget set icon 260, the portable terminal determines that the input event is a request to execute a widget set, and extracts widget set information which is set in the widget set icon 260 where the input event occurs (307). The widget set information can include widget information and position information of at least one widget 225 which is designated in the widget set icon 260 in the form of a macro. Such widget set information is described later with reference to Table 1. Then, the portable terminal determines at least one widget information which is designated in the widget set icon 260 in the form of the macro based on the extracted widget set information and fetches at least one widget 225 based on the widget information (309).

The portable terminal determines position information of the fetched widget 225 based on the widget set information and places the fetched widget 225 in the idle screen 220 according to the position information (311).

The operation for placing a widget set according to the exemplary embodiment of the present invention and fetching a corresponding widget 225 based on the widget information of the widget set information which is designated in the widget set in the form of a macro, and placing the fetched widget based on the position information of the widget set information is described with reference to Table 1 below. Table 1 lists the relationship between widget sets, and widget information of widgets set in each widget set and position information of the corresponding widgets.

**[Table 1]**

| widget set | widget set information | |
|---|---|---|
| | widget information | position information |
| first widget set | widget 8 | (a, b) |
| | widget 9 | (c, d) |
| | widget 10 | (e, f) |
| second widget set | widget 2 | (g, h) |
| | widget 4 | (i, j) |
| | widget 6 | (a, b) |
| | widget 8 | (m, n) |
| third widget set | widget 1 | (o, p) |
| | widget 2 | (m, n) |
| | widget 7 | (e, f) |
| | widget 9 | (c, d) |

Table 1 shows an example in which a user configures three widget sets. Each widget set can be a widget set configured according to a user's environment where a portable terminal is used. For example, if a user sets a group of widgets 225 which are used at work as a first widget set, a group of widgets 225 which are used at home as a second widget set, and a group of widgets 225 which are frequently used as a third widget set, the user can fetch widgets 225 corresponding to each usage mode more conveniently to configure the idle screen 220.

Table 1 shows an example in which the first widget set consists of three widgets 225 (e.g., the widget 8, the widget 9, and the widget 10), the second widget set consists of four widgets 225 (e.g., the widget 2, the widget 4, the widget 6, and the widget 8), and the third widget set consists of four widgets 225 (e.g., the widget 1, the widget 2, the widget 7, and the widget 9).

When the idle screen 220 is configured using each of the widget sets, the remaining widgets 225 except widgets 225 configuring the idle screen 220 can be provided differently according to each widget set. For example, a description is given below with reference to the example of Table 1 on the assumption that widgets provided by a portable terminal are ten widgets including a widget 1 (W1), a widget 2 (W2), a widget 3 (W3), a widget 4 (W4), a widget 5 (W5), a widget 6 (W6), a widget 7 (W7), a widget 8 (W8), a widget 9 (W9), and a widget 10 (W10).

That is, in the case where the idle screen 220 is configured using the widget 8 (W8), the widget 9 (W9), and the widget 10 (W10) according to the first widget set, widget icons respectively corresponding to seven widgets (i.e., the widget 1 (W1), the widget 2 (W2), the widget 3 (W3), the widget 4 (W4), the widget 5 (W5), the widget 6 (W6), and the widget 7 (W7)) can exist in the widget tray 210. In the case where the idle screen 220 is configured using the widget 2 (W2), the widget 4 (W4), the widget 6 (W6), and the widget 8 (W8) according to the second widget set, widget icons respectively corresponding to six widgets (i.e., the widget 1 (W1), the widget 3 (W3), the widget 5 (W5), the widget 7 (W7), the widget 9 (W9), and the widget 10 (W10)) can exist in the widget tray 210. In the case where the idle screen 220 is configured using the widget 1 (W1), the widget 2 (W2), the widget 7 (W7), and the widget 9 (W9) according to the third widget set, widget icons respectively corresponding to six widgets (i.e., the widget 3 (W3), the widget 4 (W4), the widget 5 (W5), the widget 6 (W6), the widget 8 (W8), and the widget 10 (W10)) can exist in the widget tray 210. Accordingly, as a user can intuitively recognize widget items 225 constituting each widget set, the user can perform an operation, such as the addition of widgets 225 to a specific widget set, more conveniently.

As shown in Table 1, each widget set can be configured using at least one widget 225. Widget set information corresponding to each widget set has widget information of respective widgets 225 constituting a corresponding widget set and information of a position where each widget 225 is placed on a idle screen 220. The widget information can be information of each set widget, a place where each widget 225 is stored or the like. The position information can match each widget 225 on a one-to-one basis and indicate a coordinate value where a corresponding widget 225 is placed on a idle screen 220. Each widget set can include the same widgets.

Furthermore, positions, on the idle screen 220, of the same widgets belonging to different widget sets can have different position information according to the widget sets, such as the widget 8 of the first widget set and the widget 8 of the second widget set, or can have the same position information according to each widget set, such as the widget 9 of the first widget set and the widget 9 of the third widget set. Furthermore, widgets belonging to different widget sets can have the same position information, such as the widget 8 of the first widget set and the widget 6 of the second widget set.

Accordingly, when an input event for a specific widget set is generated, the portable terminal fetches at least one widget corresponding to a widget set where the input event occurs with reference to widget set information mapped to the corresponding widget set, such as widget information and position information, arranges the widgets 225 on the idle screen 220 based on the position information of each of the fetched widgets 225, and provides the configured idle screen 220. Each of the fetched widgets 225 can be a widget corresponding to a widget icon 215 existing on the widget tray 210.

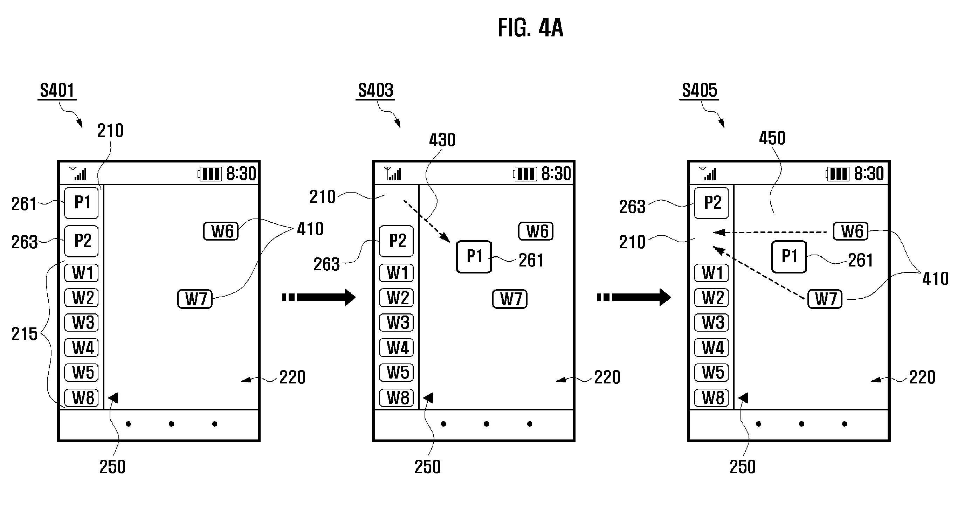

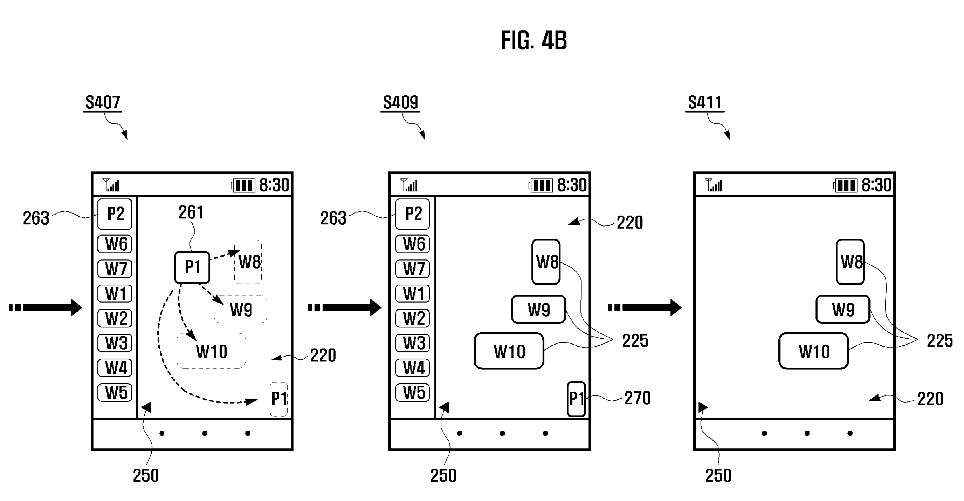

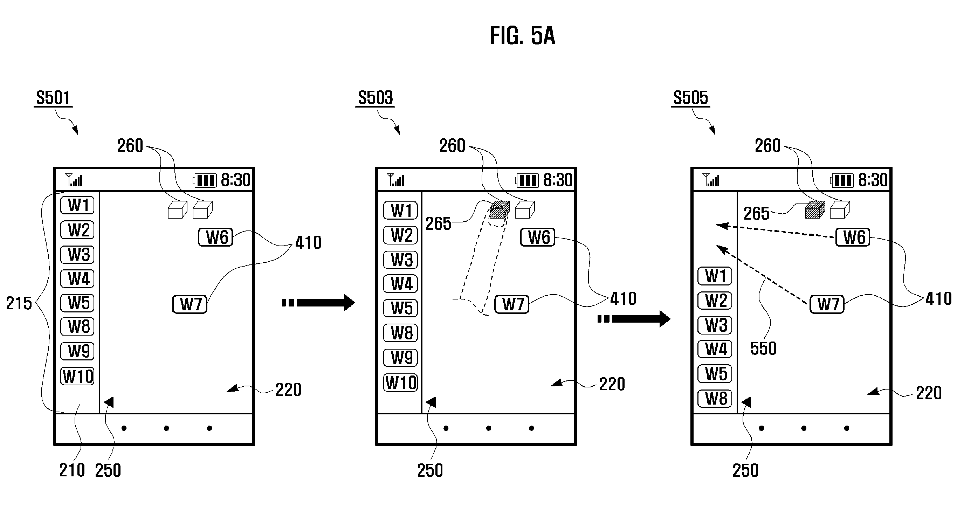

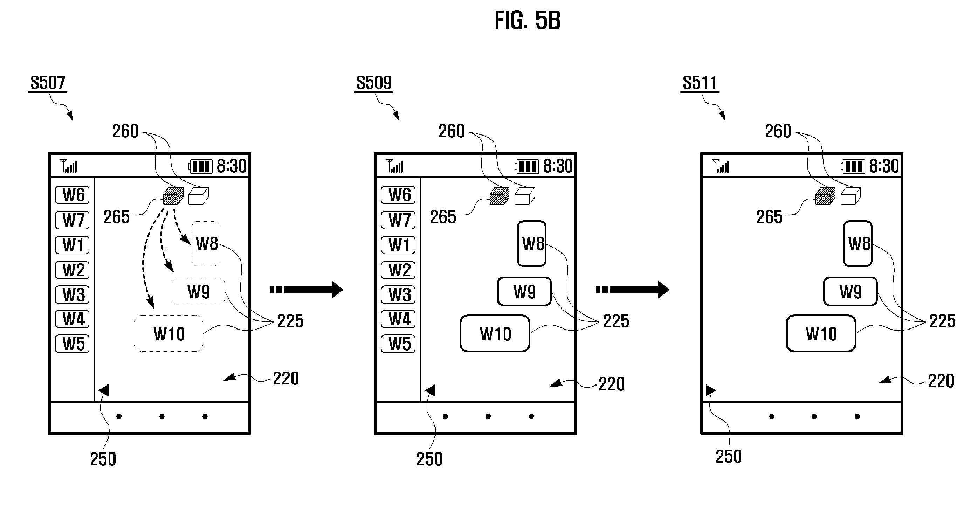

Hereinafter, an exemplary embodiment of an operation of configuring a idle screen with the fetch of the widget set is illustrated with reference to exemplary views of a portable terminal idle screen of FIG. 4A, FIG. 4B, FIG. 5A, and FIG. 5B.

FIG. 4A and FIG. 4B are drawings illustrating the operation of configuring the idle screen with the fetch of a widget set according to an exemplary embodiment of the present invention. Particularly, FIG. 4A and FIG. 4B show the operation of an exemplary embodiment where the widget set icon for the execution of a widget set exists in the tray.

Referring to FIG. 4A and FIG. 4B, as shown in reference numeral S401, the portable terminal can provide the idle screen 220 set up in a default mode. In the reference numeral S401, an arbitrary widget 410 is configured by a user in the idle screen 220, and two widget sets have been set up by the user as shown (FIG. 4A). In such a state, if a user fetches a specific widget set, the portable terminal determines the widget set information of the fetched widget set.

Then, the portable terminal fetches a given widget corresponding to the specific widget set based on the widget set information, and arranges and displays the fetched widget to a designated position on the idle screen 220. In the illustrated embodiment in FIG. 4A and FIG. 4B, the widgets according to the widget set information of the specific widget set is, for example, the widget 8 (W8), the widget 9 (W9) and the widget 10 (W10). A detailed description of fetching a widget set operation follows.

As shown in the reference numeral S403, the user can fetch the widget set icon 261 of a desired mode among widget set icons 261 and 263 existing in the tray 210 by the set up input event. In the reference numeral S401 and S403, the input event can be one event which is set up from among a drag event, a flick event and a swing event.

Therefore, if the input event is generated in the widget set icon 261, the portable terminal recognizes this as a widget set fetch. As shown by the reference numeral 430, the portable terminal can move a corresponding widget set icon 261 where the input event is generated from the tray 210 to the idle screen 220 corresponding to the fetch of the widget set, and display.

Then, as shown in the reference numeral 450 of the reference numeral S405, the portable terminal moves the widget 410 configured in the idle screen 220 to the tray 210. At this time, as the widget 410 is moved to the tray 210, each widget icon 215 corresponding to the widget 410 is generated on the tray 210 as shown in the reference numeral S407 (FIG. 4B).

Additionally, the widget set icon 261 of the tray 210 is removed corresponding to the execution of the widget set. The plurality of widget icons 215 can successively be moved and arranged, beginning with the other widget set icon 263, in a blank generated according to the removal of the widget set icon 261. Each widget icon 215 corresponding to the widget 410 on the tray 210 is generated in the next position after the widget set icon 263 existing in the tray 210, or can be generated in a default position which is preset for a corresponding widget icon 215.

Then, as shown in reference numeral S407 and reference numeral S409, once the portable terminal completes the movement of widget 410 on the idle screen 220, it activates the widget set according to the widget set icon 261. And the portable terminal fetches one or more widgets 225 with reference to the widget set information of the widget set, and arranges them on the idle screen 220 according to the corresponding position information of each widget 225.

When the portable terminal fetches the widget 225 corresponding to the widget set and arranges the fetched widget 225, a visual effect from the defined effects is displayed and the movement of the fetched widget 225 can be indicated. Moreover, when the idle screen 220 is configured with the fetched widget 225 of the widget set, the widget set ribbon 270 can be displayed on the idle screen 220 so that a user may recognize that the widget 225 displayed on the idle screen 220 is configured by the widget set according to the widget set icon 261.

The widget set ribbon 270 shows that the visual effect displayed while the widget set icon 261 moves to the position of the reference numeral 270 after fetching the widget 225 is completed. The set up effect includes the change in size of the widget set icon 261, or a change into an icon having a form or color which is separately set up. Additionally, as shown in the reference numeral S411, the widget set ribbon 270 can be removed (hidden) when the operation that removes (hides) the tray 210 on the idle screen 220 is performed.

That is, as shown in reference numeral S409 and reference numeral S411, if the input event of the user about the indicator 250 formed on the idle screen 220 is sensed, the portable terminal can remove the widget set ribbon 270 while removing the tray 210 on the idle screen 220. Moreover, while a user uses the widget set when the tray 210 is displayed again, the portable terminal can display again the widget set ribbon 270 on the idle screen 220 in response to the displaying of the tray 210.

In FIG. 4A and FIG. 4B, the operation of displaying or removing the widget set ribbon 270 in response to the displaying or removal of the tray 210 is exemplified. However, the widget set ribbon 270 can be displayed on the idle screen 220 according to the setting method regardless of the displaying or removal of the widget tray 210.

FIG. 5A and FIG. 5B are drawings illustrating another example of a screen of the operation of configuring the idle screen with the fetch of a widget set according to an exemplary embodiment of the present invention. Particularly, FIG. 5A and FIG. 5B shows the operation of the exemplary embodiment in the case where the widget set icon for the execution of a widget set exists in the idle screen.

Referring to FIG. 5A and FIG. 5B, as shown in reference numeral S501, the portable terminal can provide the idle screen 220 set up in a default mode. In the reference numeral S501, an arbitrary widget 410 is configured by a user on the idle screen 220. Two widget sets are also set up by the user and the widget set icons 260 corresponding to the two widget sets exist on the idle screen 220.

In such a state, when the user fetches a specific widget set on the idle screen 220, the portable terminal determines the widget set information of the fetched widget set. Then, the portable terminal fetches a given widget corresponding to the specific widget set based on the widget set information, and arranges and displays the fetched widget to a designated position on the idle screen 220. As shown in FIG. 5B, the widget according to the widget set information of the specific widget set, for example, is the widget 8 (W8), the widget 9 (W9) and the widget 10 (W10). These fetching operations are described below.

As shown in the reference numeral S503, the user can fetch the widget set icon 265 of the mode desired by the user among the widget set icons 260 existing in the idle screen 220 by the set up input event. In the reference numeral S503, the input event can be one event which is set up among a touch event, a tap event and a flick event.

Accordingly, if the input event is generated in the widget set icon 265, the portable terminal recognizes this as a widget set fetch. The portable terminal can provide a set up effect to the widget set icon 265 and display the effect, as shown in the reference numeral S503, corresponding to the widget set fetch input event. The set up effect can include a highlighted display of the widget set icon 265 or a replacement with other icon having a differently set up form.

Then, as shown by reference numeral 550 of reference numeral S505, the portable terminal moves the widget 410 configured in the idle screen 220 to the tray 210. At this time, as the widget 410 is moved to the widget tray 210, each widget icon 215 which corresponds to the widget 410 is generated on the widget tray 210 as shown in the reference numeral S507. The widget icon 215 corresponding to the widget 410 generated in the tray 210 is generated in the upper position on the tray 210, or can be generated in a default position which is preset for a corresponding widget icon 215.

Then, as shown in reference numeral S507, when the portable terminal completes the widget 410 movement on the idle screen 220, it activates the widget set according to the widget set icon 265. One or more widgets 225 are fetched with reference to the widget set information of the widget set, and arranged according to the position information of each widget 225 on the idle screen 220. At this time, when the portable terminal fetches the widget 225 corresponding to the widget set and arranges it, the visual effect of the defined effect is given and the movement of the fetched widget 225 can be displayed.

Moreover, when the idle screen 220 is configured with the widget 225 of the widget set, a corresponding widget set icon 265 is differentially displayed so that a user may recognize that the widget 225 displayed on the current idle screen 220 is configured by the widget set according to the widget set icon 265. For example, a corresponding widget set icon 265 which is currently activated is displayed to be highlighted, or the color of the currently activated corresponding widget set icon 265 is changed.

Then, as shown in reference numeral S509 and reference numeral S511, when the input event of the user for the indicator 250 formed on the idle screen 220 is sensed, the portable terminal can remove the tray 210 on the idle screen 220. At this time, the display of the widget set icon can be continuously maintained.

Moreover, in FIG. 5A and FIG. 5B, the widget set icons 260 can be always displayed on the idle screen 220 regardless of the display and removal of the tray 210. However, the widget set icons 260 can be displayed on or removed from the idle screen 220 corresponding to the display and removal of the tray 210 according to the setting method.

In the above description, an exemplary embodiment of the operation of configuring the idle screen 220 corresponding to the widget set fetch of the present invention was illustrated. Now, the operation of configuring the idle screen corresponding to the end of the use of a widget set is described below.

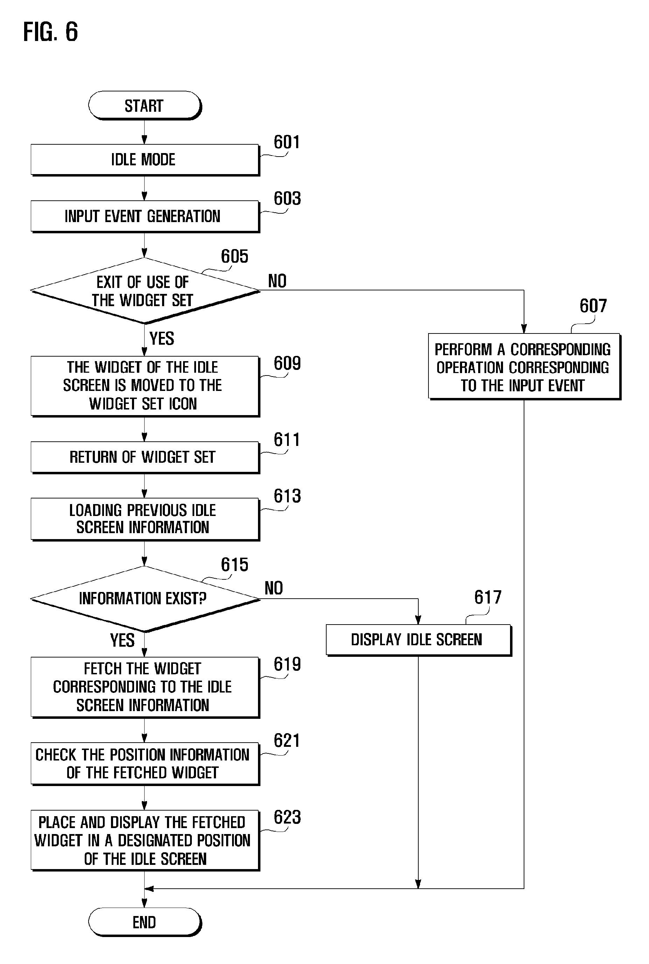

FIG. 6 illustrates the operation of canceling the idle screen configured by the widget set according to an exemplary embodiment of the present invention.

Referring to FIG. 6, firstly, in the idle mode (601), when the portable terminal senses the input event generation by a user (603) it determines whether the input event is an input event requesting the exit of use of the widget set which is currently activated (605).

Here, the input event is an event generated on the touch screen of the portable terminal according to an exemplary embodiment, which can include events using various input modes which can be generated on the touch screen, such as a touch event, a tap event, a drag event, a flick event, and a swing event. In FIG. 6, the input event is an event for exiting the use of the widget set and can be at least one event which is previously set among the events using the various input modes.

Whether the use of the widget set is exited can be determined by checking whether an input event requesting the movement of the widget set icon of the widget set activated on the idle screen to the tray is generated, or an input event is generated in a corresponding widget set icon indicating the active state of the widget set on the idle screen.

If the input event is not the exit of use event of the widget set, the portable terminal can perform a corresponding operation corresponding to the input event in response to the user request (607). That is, if the input event is an input event generated in places of the touch screen other than where the widget set icon is, that is, an input event generated in a widget icon on the tray or a widget on the idle screen, the portable terminal can perform an operation corresponding to the input event (607).

For example, if the input event occurs in a specific widget on the idle screen, the portable terminal can execute an application corresponding to the specific widget or perform an operation pertinent to the specific widget. Alternatively, if the input event occurs in a specific widget icon on the widget tray, the portable terminal can execute an application corresponding to the specific widget icon according to the input event or can perform an operation for moving the specific widget icon to the idle screen and then executing an application corresponding to a corresponding widget.

If the portable terminal determines that the input event is a use exit event of the widget set, at least one widget corresponding to the widget set displayed on the idle screen is moved to the widget set icon of the widget set (609).

At this time, the movement of the widget can be provided in such a manner that a visual and intuitive effect is given so that it is not actually included in the widget set icon, but it disappears into the widget set icon. Accordingly, the portable terminal provides the effect of removing the widget on the idle screen by moving the widget on the idle screen to the widget set icon corresponding to the input event.

Then, when the portable terminal recognizes that the movement of the widget on the idle screen is completed, the widget set is returned (611). That is, by removing the activating effect which is given to the widget set icon, the portable terminal can inform a user that the widget set is deactivated. For example, the portable terminal can move the widget set icon into the tray and display it there, or the portable terminal can change a display of informing the user of the active state of the widget set icon into a display of informing the user of the non-active state of the widget set icon.

Then, when the return of the widget set is completed, the portable terminal loads the previous idle screen information before activating the widget set (613). That is, when the use of the widget set is exited, the portable terminal loads the previous information (e.g., idle screen information) about the widgets configuring the idle screen before fetching the widget set and can confirm existence of the previous information (615).

At this time, in the idle screen information, if the information about a widget does not exist, the portable terminal can display a blank idle screen (617). For example, only the idle screen of empty space which does not provide any widget can be displayed on the idle screen. Then, the portable terminal can enter the idle mode waiting the input event of the user.

On the other hand, if the information about a widget exists in the idle screen information, the portable terminal fetches the widget corresponding to the idle screen information (619). Then, the portable terminal checks the position information of the fetched widget (621), moves the fetched widget to the idle screen according to the position information and arranges the fetched widget (623).

The format of the idle screen information can correspond to the format of the widget set information as shown in above-described Table 1. Thus, a detailed description of the idle screen information is omitted.

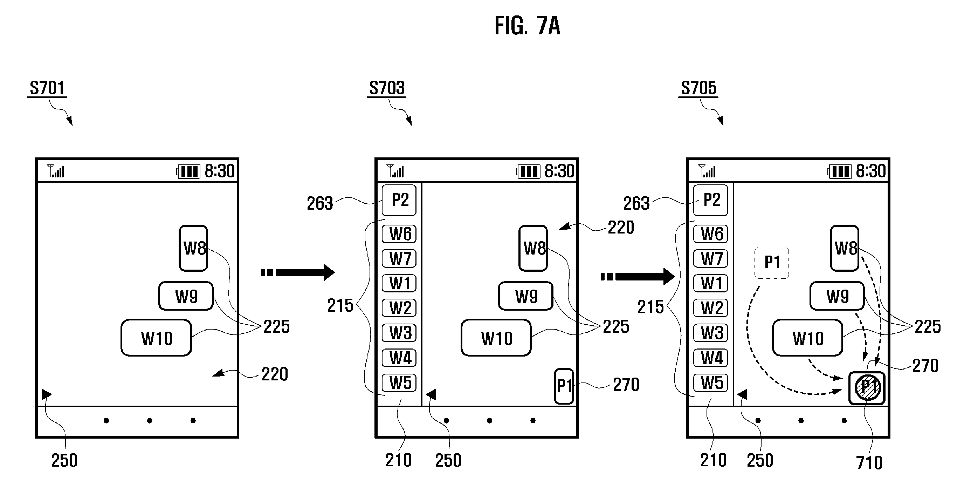

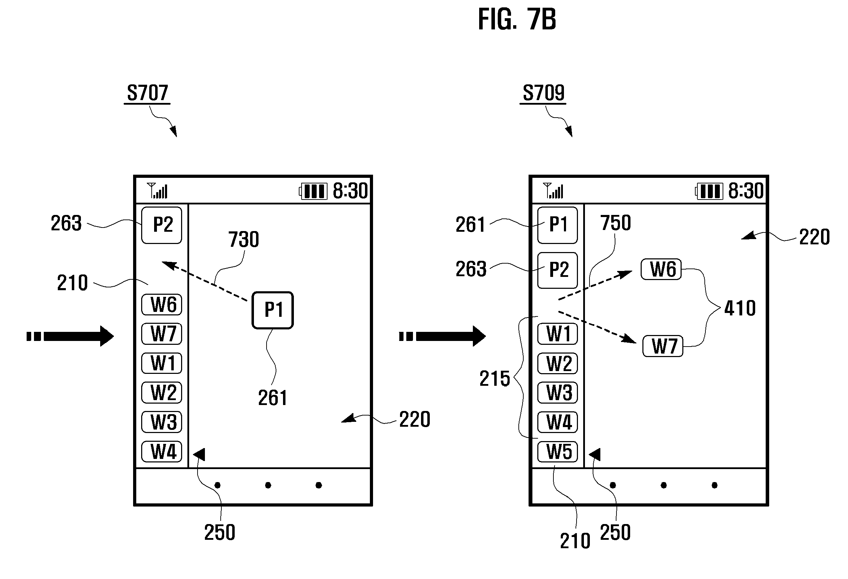

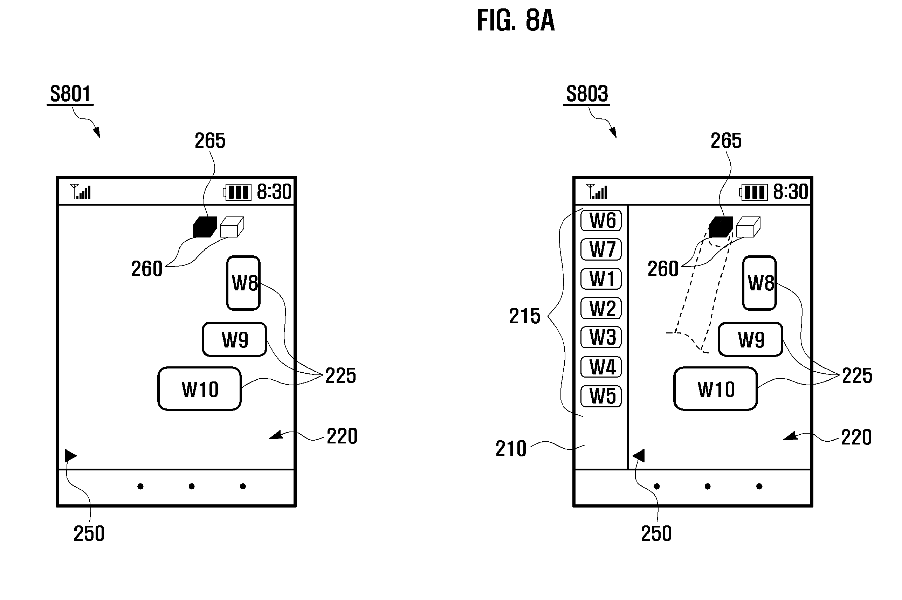

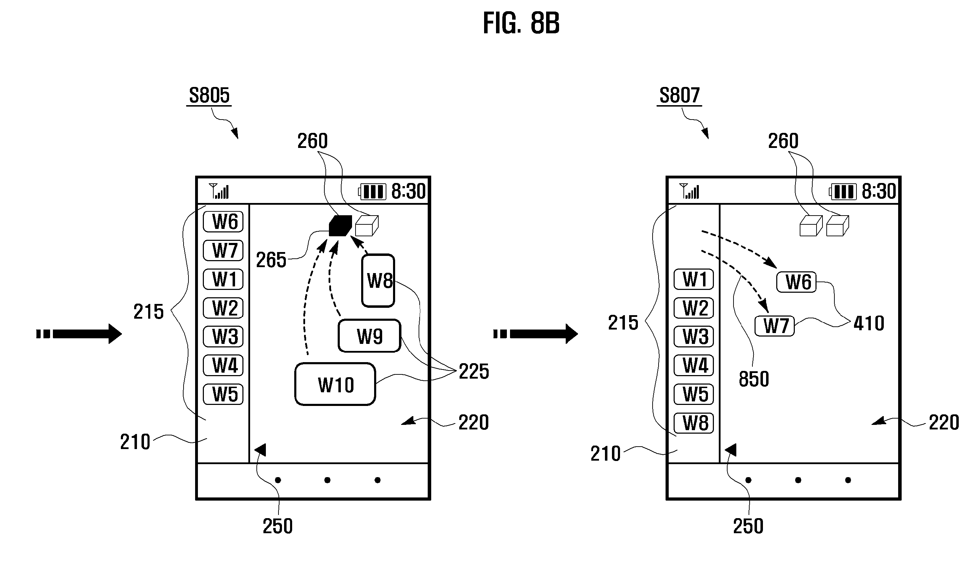

Hereinafter, an exemplary embodiment of the operation of canceling the idle screen configured by the widget set of the present invention is illustrated with reference to an example view of screen of FIG. 7A, FIG. 7B, FIG. 8A, and FIG. 8B.

FIG. 7A and FIG. 7B are drawings illustrating an example of a screen of the operation of canceling the idle screen configured by the widget set according to an exemplary embodiment of the present invention. Particularly, FIG. 7A and FIG. 7B illustrate an exemplary operation of the case where the widget set icon for the execution of the widget set exists in the tray.

Referring to FIG. 7A and FIG. 7B, as shown in reference numeral S701, the portable terminal can provide the idle screen 220 configured by a specific widget set. At this time, FIG. 7A and FIG. 7B illustrate an example of the case in which the idle screen 220 is configured by the same method as shown in FIG. 4A and FIG. 4B.

In such a state, when a user requests the exit of the widget set which is activated, the portable terminal changes and provides the idle screen 220 configured by the previous widget set according to the previous information of the idle screen. That is, the portable terminal fetches the widget of the previous idle screen 220 with reference to the idle screen information prior to the configuration of the idle screen 220 by the widget set, arranges the fetched widget to a designated position on the idle screen and displays it. A detailed description of fetching of the previous widget set operation is as follows.

As shown in reference numeral S701 and reference numeral S703, firstly, a user generates an input event to the indicator 250 and can display the tray 210. At this time, when the tray 210 is displayed according to the input event, a widget set ribbon 270 of the set up widget set can be displayed on the idle screen 220.

That is, corresponding to the displaying of the removed tray 210, the widget set ribbon 270 can be fetched. Optionally, as described above, the widget set ribbon 270 can be always displayed on the idle screen 220 regardless of the display or removal of the tray 210. Thus, in the case of a method where the widget set ribbon 270 always exists in the idle screen 220, the fetch process of the widget set ribbon 270 can be omitted.

Then, by generating the input event which is set up in the widget set ribbon 270, the user can request the exit of the widget set use. The input event can be at least one event which is set up among a touch event, a tap event and a hold event.

That is, as shown in reference numeral S705, if the input event 710 is generated in the widget set ribbon 270, the portable terminal can recognize this as an exit of the widget set which is currently activated. For example, if a user holds the widget set ribbon 270 for a certain time, that is, if a hold event 710 is generated, the portable terminal determines this as a widget set use exit.

Thus, the portable terminal can move the widget 225 of the idle screen 220 to the widget set ribbon 270 after expanding the widget set ribbon 270 to an original size according to an effect which is applied to the widget set ribbon 270, or, corresponding to the hold event 710 generation, can directly move the widget 225 of the idle screen 220 to the widget set ribbon 270.

That is, according to the set up method, the size of the widget set ribbon 270 can be fixed or the widget set ribbon 270 can be provided with the display and remove modes like the tray 210. Moreover, when the portable terminal moves the widget 225 of the idle screen 220, a visual effect of defined effect can be given to indicate the movement of the widget 225.

Then, as shown in the reference numeral S705 and reference numeral S707, when the movement of the widget 225 of the idle screen 220 to the widget set ribbon 270 is completed, only the widget set ribbon 270 may be displayed on the idle screen 220.

At this time, the portable terminal can return the widget set ribbon 270 to an initial state to be provided, like reference numeral 261, after moving the widget set ribbon 270 to a position where the widget set icon 261 of the widget set is fetched, in the idle screen 220 by the widget set.

In the case where the movement of the widget set icon 261 is completed, the portable terminal moves the widget set icon 261 to the tray 210 corresponding to an input event generated in the widget set icon 261 like reference numeral 730 of the reference numeral S707. The input event can be at least one event which is set up among a flick event, a drag event and a swing event.

Then, as shown in the reference numeral S707 and reference numeral S709, if the movement of the widget set icon 261 is completed, the portable terminal generates and displays the widget set icon 261 in the tray 210 while removing the widget set icon 261 on the idle screen 220.

In the case where the portable terminal completes the movement of the widget set icon 261, as shown in the reference numeral S709, the portable terminal fetches the widget 410 which is configured in the idle screen 220 before the activation of the widget set, and moves the widget icon corresponding to the fetched widget 410 from the tray 210 to the idle screen 220 as shown in reference numeral 750.

The portable terminal executes the widget 410 corresponding to the widget icon 215, and can arrange the executing widget 410 on the idle screen 220 according to the position information. Additionally, corresponding to the movement of the widget icon 215, which existed in the tray 210, the portable terminal removes that widget icon 215 corresponding to the widget 410 out of the tray 210, and arranges the remaining widgets 215 to display in the tray 210.

The widget set icon 261 corresponding to a widget set to be exited can be moved to a corresponding position set up on the tray 210. That is, as shown in the reference numeral S709, the widget set icon 261 can move to the upper position of the tray 210, and, correspondingly, the remaining widget set icon 263 and a plurality of widget icons 215 successively move and can be enumerated.

FIG. 8A and FIG. 8B are drawings illustrating another example of a screen of the operation of canceling the idle screen configured by the widget set according to an exemplary embodiment of the present invention. Particularly, FIG. 8A and FIG. 8B illustrate an exemplary embodiment of the operation of the case where the widget set icon for the execution of a widget set exists in the idle screen.

Referring to FIG. 8A and FIG. 8B, as shown in reference numeral S801, the portable terminal can provide the idle screen 220 configured by a specific widget set. At this time, FIG. 8A and FIG. 8B illustrate an example of the case in which the idle screen 220 is configured by the same method as described with reference to FIG. 5A and FIG. 5B.

In such a state, if a user requests the exit of the widget set which is activated, the portable terminal changes and provides the idle screen 220 configured by the widget set, according to the previous information of the idle screen. That is, the portable terminal fetches the widget of the previous idle screen 220 with reference to the idle screen information prior to the configuration of the idle screen 220 by the widget set, arranges the fetched widget to a designated position on the idle screen and displays it. A detailed description of this operation is as follows.

As shown in reference numeral S801 and reference numeral S803, firstly, a user can generate an input event in the widget set icon 265 corresponding to an activated widget set and request the exit of the widget set.

At this time, the tray 210 can be displayed according to the input event. Optionally, as described with reference to FIG. 7A and FIG. 7B, the operation of generating the input event in the widget set icon 265 can occur after using the indicator 250 to display the tray 210. The input event generated in the widget set icon 265 can be at least one event which is set up among a touch event and a tap event.

That is, as shown in the reference numeral S803, if the input event is generated in the widget set icon 265, the portable terminal can recognize this as the exit of the currently activated widget set. Thus, as shown in reference numeral S805, the portable terminal can move the widget 225 of the idle screen 220 to the widget set icon 265, or can move the widget 225 of the idle screen 220 to the tray 210 (not shown). When the portable terminal moves the widget 225 of the idle screen 220, it can give a visual effect of a defined effect, which can indicate the movement of the widget 225.

Then, as shown in reference numeral S807, when the movement of the widget 225 is completed, the portable terminal can generate and display a widget icon 215 corresponding to the widget 225 in the tray 210 while removing the widget 225 from the idle screen 220 (e.g., W8). Additionally, in response to a use exit request of the widget set, the portable terminal can remove an effect which is applied to the widget set icon 265 and thereby indicate at a point in time when the movement of the widget 225 is completed.

For example, in the case of a highlight effect to indicate that the activation of the widget set is applied to the widget set icon 265, the highlight applied to the widget set icon 265 can be removed. Alternatively, in the case where the widget set icon 265 is replaced with another icon which indicates the activation of the widget set, it can be restored to a default widget set icon 265.

Then, when the movement of the widget 225 is completed, as shown in the reference numeral S807, the portable terminal fetches the widget 410 which was configured in the idle screen 220 prior to the activation of the widget set. The portable terminal moves the widget icon corresponding to the fetched widget 410 from the tray 210 to the idle screen 220 as shown by the reference numeral 850. At this time, the portable terminal executes the widget 410 corresponding to the widget icon, and can arrange the executing widget 410 on the idle screen 220 according to the position information.

Additionally, corresponding to the movement of the widget icon 215 from the tray 210 and the movement of the widget 225 from the idle screen 220, the portable terminal removes and adds a corresponding widget icon 215 in the tray 210 according to the movement direction and displays the widget icon 215 to the tray 210.

That is, the tray 210 removes the widget icon (W6, W7) corresponding to the widget 410, and adds the widget icon (W8, W9, W10) corresponding to the widget 225 and arranges the widget icons 215, and can display the widget icons 215 to the tray 210. In the above description, the operation of configuring the idle screen 220 corresponding to the widget set fetch and the operation of canceling the idle screen configured by the widget set were illustrated according to exemplary embodiments of the present invention. Hereinafter, the operation of setting up and editing of the widget set is illustrated.

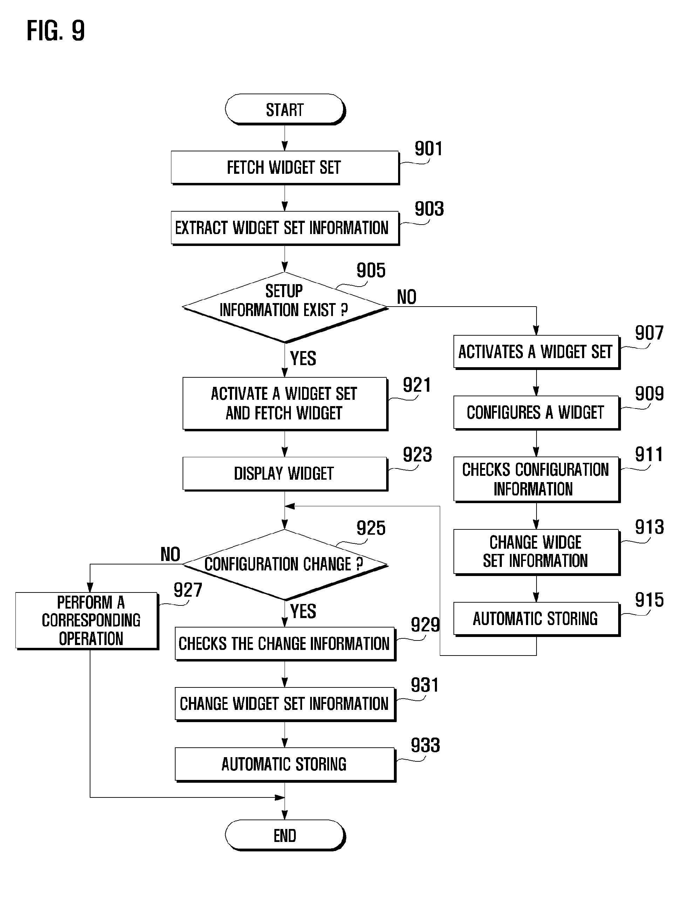

FIG. 9 illustrates the operation of setting up and editing the widget set according to an exemplary embodiment of the present invention.

Referring to FIG. 9, firstly, when the widget set execution is fetched by a user in the idle mode (901), that is, if an input event is generated in a specific widget set icon, the portable terminal extracts widget set information which is set up in a corresponding widget set (903). The portable terminal determines whether setup information about the fetched widget set exists through the extraction of widget set information (905). In the initial widget set fetch, the initially organized widget may not exist according to the providing type of the portable terminal.

In the case where the setup information does not exist at step 905, the portable terminal activates a corresponding widget set in response to the widget set fetch (907). At this time, the idle screen according to the activation of the widget set displays a blank idle screen, that is, a idle screen which does not include a widget. Then, the portable terminal configures a widget in response to a user request (909). That is, the portable terminal arranges a given widget according to the user request to the idle screen (909).

The portable terminal checks configuration information according to the arrangement of the widget (911). That is, when the portable terminal configures the widget, it obtains widget information of the widget set which is currently activated and a corresponding widget configuring the idle screen and position information at the idle screen of each widget, and changes initial widget set information into widget set information like Table 1 by the information thus obtained (913). The portable terminal stores the widget set information (915). The storing can be a type of setting up of a macro about a corresponding widget set by the widget set information.

Thus, when fetching the widget set later, each widget is fetched by the set up macro, and arranged to the idle screen according to the position information of the fetched widget.

Moreover, the widget set information can be adaptively applied corresponding to any change of the widget configuration which may be generated after the storage. That is, the widget set information can be adaptively updated corresponding to the change of widget configuration.

In the case where setup information does exist at step 905, the portable terminal activates a corresponding widget set in response to the widget set fetch, and fetches at least one widget configured in the widget set (921). Then, the portable terminal arranges and displays the widget to the idle screen according to the position information of the fetched widget (923). The portable terminal can check whether the configuration of the widget of the idle screen is changed (925). The change of the configuration can be continuously checked when the widget set is activated. In case an event such as the addition of a widget, a change in positioning of a widget, the removal of a widget, or the like is generated on the idle screen, this can be determined as a configuration change.

If the configuration is not changed at step 925, the portable terminal can perform a corresponding operation according to the user request (927). For example, the function of a specific widget selected among the widgets of the idle screen can be processed. Alternatively, the use of the widget set can be exited in response to the user request. At this time, the current idle screen can be changed into the previously configured idle screen, when the use of widget set is exited.

If the configuration is changed at step 925, the portable terminal checks the change information of the widget changed in the idle screen (929). That is, the portable terminal obtains the change information such as the repositioning of a widget, the removal of a widget, the addition of a new widget, or the like from the idle screen configured by the currently activated widget set. The change information can include the widget information and position information of a corresponding widget which is added, modified, or removed.

Then, the portable terminal changes the widget set information corresponding to the widget set by the change information (931). The portable terminal stores the widget set information (933). The storage can be a type of changing of the macro of the corresponding widget set by the widget set information.

That is, the storage can be a type of setting up a change in the macro according to the widget information and position information of the changed widget to the widget set information. Accordingly, when fetching the widget set later, each widget is fetched by the changed macro, and arranged to the idle screen according to the position information of the fetched widget.

As described above, a user can directly control the setting up and editing of the idle screen configuration according to the operation of the widget set of the portable terminal, on the touch screen through the input event. That is, in the setting up and editing of the widget set, the addition, deletion, or modification of a widget can be freely made when the widget set is activated, while the user can perform the setting up and editing of the widget set at any time in the idle screen which is currently displayed without proceeding through a cumbersome process such as a entering a specific menu to select, set up and edit a widget.

According to the activation of the widget set, the portable terminal can store corresponding change information when information such as position information of the widget which is being displayed on the idle screen is changed. Afterwards, when the widget set is activated again, the change information can be reflected and provide the changes to the idle screen configuration of the widget set.

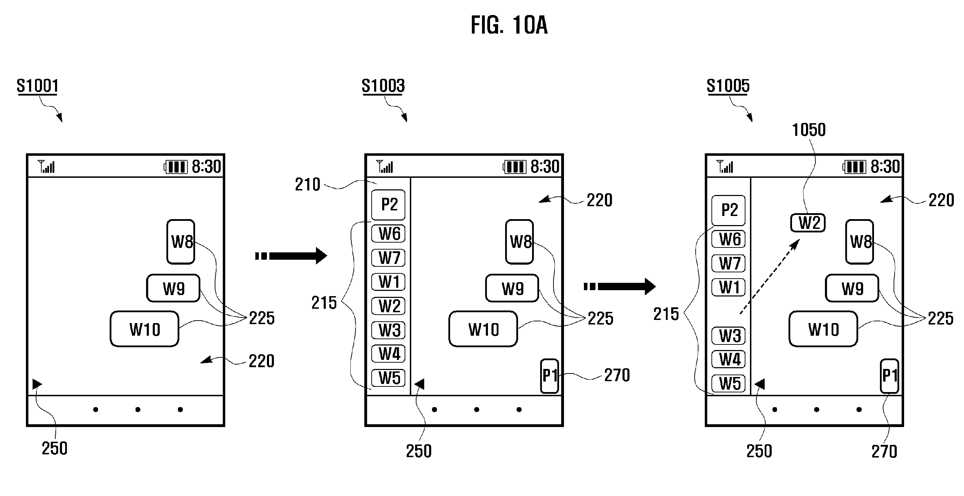

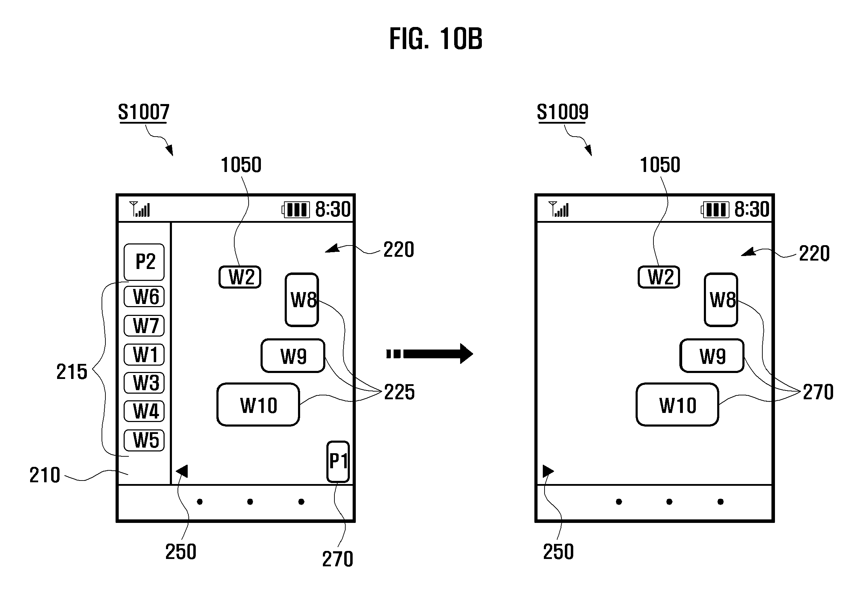

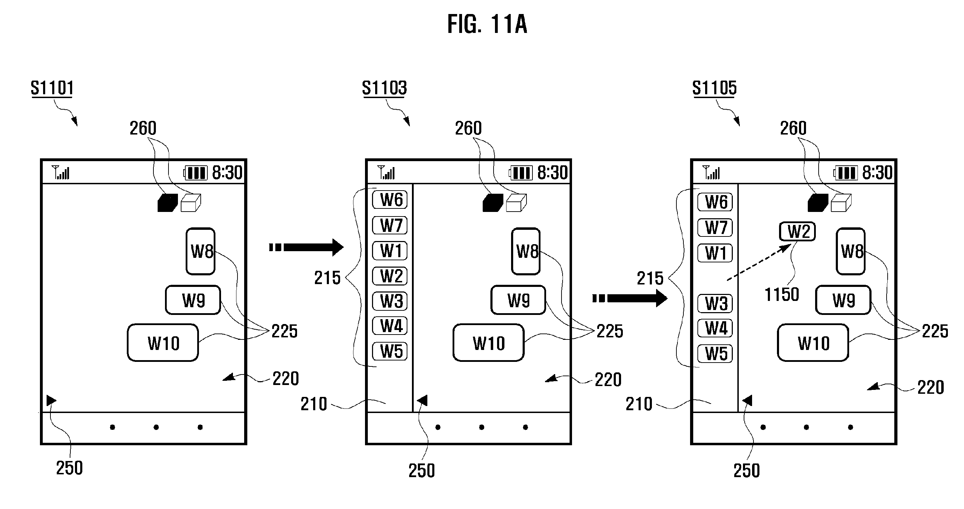

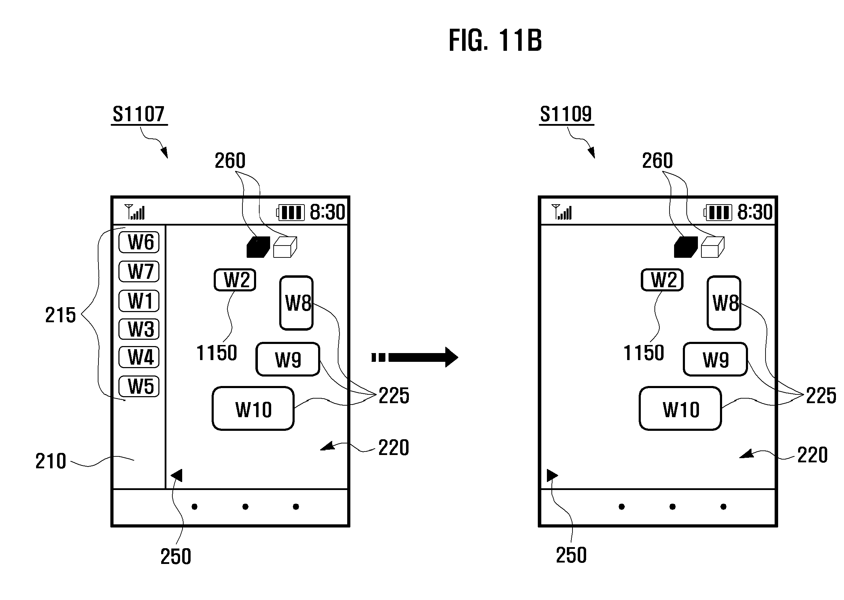

Hereinafter, an exemplary embodiment of the operation of setting up and editing the above-described widget set of the present invention is illustrated with reference to an example view of screen FIG. 10A, FIG. 10B, FIG. 11A, and FIG. 11B.

FIG. 10A and FIG. 10B are drawings illustrating the operation of setting up and editing the widget set according to an exemplary embodiment of the present invention. Particularly, FIG. 10A and FIG. 10B illustrate an exemplary embodiment of an operation where the widget set icon for the execution of the widget set is located in the tray, and a new specific widget is added.

Referring to FIG. 10A and FIG. 10B, as shown in reference numeral S1001, the portable terminal can provide the idle screen 220 configured by a specific widget set. At this time, FIG. 10A and FIG. 10B illustrate an example of the idle screen 220 configured by the same method as described with reference to FIG. 4A and FIG. 4B.

In such a state, a user can display the tray 210 by generating the input event in the indicator 250. That is, the portable terminal displays and provides the tray 210, as shown in reference numeral S1003, in response to the input event which is generated in the indicator 250. When the tray 210 is displayed, the portable terminal can also provide and display the widget set ribbon 270 informing the user of the activation state of the widget set.

Then, as shown in reference numeral S1005 and reference numeral S1007, the user can add a desired specific widget 1050. That is, the user generates an input event in a specific widget icon 215 existing in the tray 210 so that a new widget 1050 can be added to the idle screen 220.

The portable terminal moves a specific widget icon 215 in which the input event is generated among the widget icons 215 of the tray 210 to the position of the idle screen 220 corresponding to the input event. The widget 1050 corresponding to the widget icon 215 is executed.

Additionally, when the portable terminal recognizes that a new widget is added to the idle screen 220, widget information and position information of the widget are updated in the widget set information of the activated widget set.

Then, as shown in reference numeral S1009, the portable terminal removes the tray 210 on the idle screen 220 in response to a close request of the tray 210 from the user, that is, through the input event generated in the indicator 250. At this time, the portable terminal can remove the widget set ribbon 270 while removing the tray 210.

Adding a specific widget to the idle screen 220 was illustrated above. However, a specific widget of the idle screen 220 can be removed by the above-described method, or the position of a specific widget can be changed by the above-described method.

Moreover, in FIG. 10A and FIG. 10B, the operation of adding the new widget 1050 to the idle screen 220 including the widget icon 215 which was set up before the activation of the widget set was illustrated.

When the initial widget set activation or the widget set configured in the activated widget set does not exist, only a blank idle screen is displayed, and the user can configure the idle screen by adding a new widget with the method described above to the blank idle screen.

As described above, when the configuration of a widget is changed in the idle screen 220, the portable terminal stores corresponding change information, and the change information can be updated in the widget set information of a corresponding widget set on a real time basis.

FIG. 11A and FIG. 11B are drawings illustrating the operation of setting up and editing the widget set according to an exemplary embodiment of the present invention. Particularly, FIG. 11A and FIG. 11B illustrate an exemplary embodiment of an operation where the widget set icon for the execution of the widget set exists in the idle screen, and a new specific widget is added.

Referring to FIG. 11A and FIG. 11B, as shown in reference numeral S1101, the portable terminal can provide the idle screen 220 configured by a specific widget set. At this time, FIG. 11A and FIG. 11B illustrate an example of the case in which the idle screen 220 is configured by the same method as described above with reference to FIG. 5A and FIG. 5B.

In such a state, a user can display the tray 210 by generating the input event in the indicator 250. That is, the portable terminal displays and provides the tray 210, as shown in reference numeral S1103, in response to the input event which is generated in the indicator 250.

Then, as shown in reference numeral S1105 and reference numeral S1107, the user can add a desired specific widget 1150. That is, the user generates an input event in a specific widget icon 215 located in the tray 210 so that a new widget 1150 can be added to the idle screen 220.

The portable terminal moves a specific widget icon 215 in which the input event is generated among the widget icons 215 of the tray 210 to the position of the idle screen 220 corresponding to the input event. The widget 1150 corresponding to the widget icon 215 is executed.

Additionally, when the portable terminal recognizes that a new widget is added to the idle screen 220, widget information and position information of the widget are updated in the widget set information of the activated widget set.

Then, as shown in reference numeral S1109, the portable terminal removes the tray 210 on the idle screen 220 in response to a close request of the tray 210 by the user, that is, the input event generated in the indicator 250.

Adding a specific widget to the idle screen 220 was illustrated above. However, a specific widget of the idle screen 220 can be removed by the above-described method, or the position of a specific widget can be changed by the above-described method.

Moreover, in FIG. 11A and FIG. 11B, the operation of adding the new widget 1150 to the idle screen 220 including the widget icon 215 which was set up before the activation of the widget set was illustrated.

When the initial widget set activation or the widget set configured in the activating widget set does not exist, only a blank idle screen is displayed, and the user can configure the idle screen by adding the new widget with the method described above to the blank idle screen.

As described above, when the configuration of the widget is changed in the idle screen 220, the portable terminal stores the corresponding change information, and the change information can be updated in the widget set information of a corresponding widget set on a real time basis.

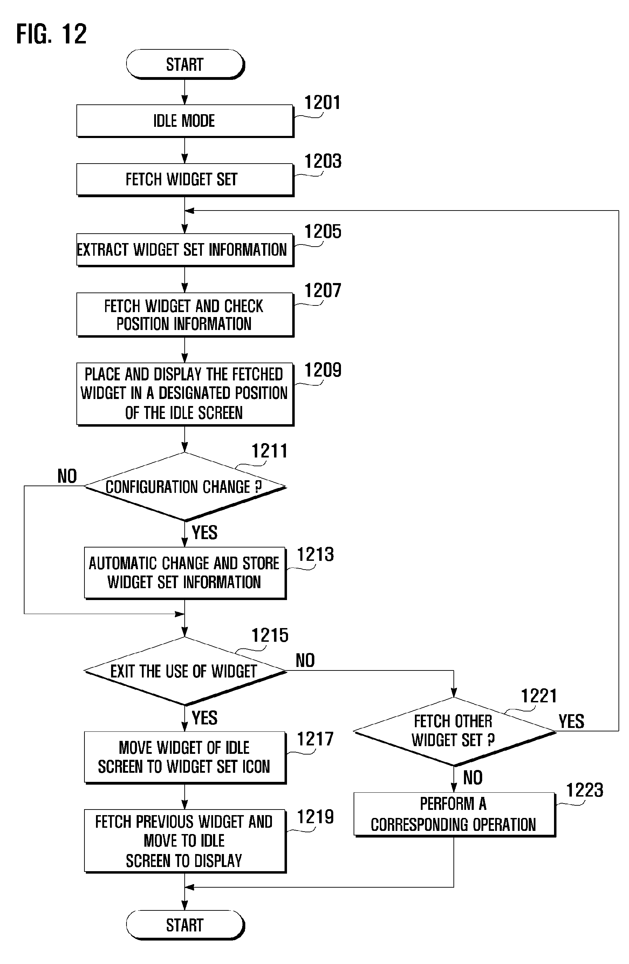

FIG. 12 is a illustrates the idle screen configuration operation according to an utilization of a widget set in a portable terminal according to an exemplary embodiment of the present invention.

Referring to FIG. 12, firstly, in the idle mode (1201), in the case where the portable terminal senses the widget set fetch by user (1203), the portable terminal extracts widget set information of a corresponding widget set in response to the widget set fetch (1205).

The widget set information can include widget information and position information of at least one widget. At this time, in the case where the widget set fetch is an initial first widget set fetch, widget set information corresponding to the widget set does not exist, or widget information and position information about a widget is not included in the widget set information.

Then, the portable terminal fetches the widget according to the widget information of the widget set information, and checks the position information of the fetched widget (1207). The portable terminal moves the fetched widget from the tray to a designated position of the idle screen according to the position information of the widget set information and arranges the fetched widget on the idle screen accordingly (1209). At this time, when the portable terminal provides the idle screen configured by the widget according to the widget set, the process of moving the widget that was displaying on the idle screen before to the tray can be performed.

The portable terminal checks an event requested from a user during the providing of the idle screen which is configured as described above. For example, the portable terminal checks an event generation such as the configuration change for a widget configuring the idle screen (1211), the widget set use exit (1215), and the other widget set fetch (1221), and, in the case where a specific event is generated, a pertinent operation can be performed.

Firstly, if the configuration change for a widget on the idle screen is sensed (1211), the portable terminal changes and stores the widget set information of the widget set with reference to the widget information and position information of the corresponding changed widget (1213).

Moreover, when the use exit for the widget set is sensed (1215), the portable terminal moves the widget of the idle screen to the widget set icon (1217). According to the idle screen information, the portable terminal fetches the widget configuring the previous idle screen, moves and arranges the fetched widget to a designated position of the idle screen (1219).

Moreover, when the fetch other widget set is sensed (1221), the portable terminal proceeds to step 1205, so that the operation of configuring the idle screen by the other widget set which is newly fetched can be performed. Moreover, in the idle screen state by the widget set, the portable terminal can perform a corresponding operation requested from a user (1223). For example, the portable terminal can execute an application program corresponding to a specific widget on the idle screen, or can perform the operation relevant to a specific widget in response to a user request

As described with reference to the exemplary embodiments illustrated in FIG. 1A to FIG. 12, the operation of the illustrated embodiments is performed by an input event generated on a touch screen. However, the idle screen configuration by the widget set operates not only by the input event of the touch screen. That is, it can be operated through the manipulation of a keypad of general key arrangement or a mouse pointer which is included in a portable terminal. For example, the selection and execution of a specific widget set, a widget icon, and a widget can be performed by using a selection key, a direction key, or a numeric key of a keypad.

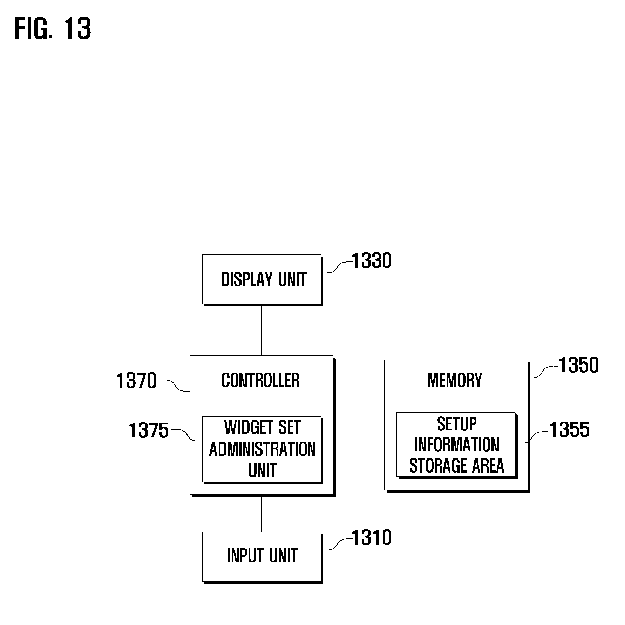

An example of the portable terminal described above can include an IT (information and telecommunication) device such as a PDA (Personal Digital Assistant), a PMP (Portable Multimedia Player), an MP3 player, a digital broadcasting player and a mobile telecommunication terminal, a multimedia device and various relevant application devices. A schematic structure of an exemplary embodiment of the portable terminal of the present invention is described with reference to FIG. 13.

FIG. 13 is a schematic drawing of a block configuration of a portable terminal according to an exemplary embodiment of the present invention.

Referring to FIG. 13, the portable terminal according to an exemplary embodiment of the present invention includes an input unit 1310, a display unit 1330, memory 1350 and a controller 1370.

The input unit 1310 receives various character information, and sends a signal inputted in connection with the setting up of various functions and the function control of the portable terminal, to the controller 1370. Particularly, the input unit 1310 can include an additional touch pad, and can be formed of the touch pad according to the offer type of the portable terminal.

Additionally, according to the offer type of the portable terminal, the input unit 1310 can be formed of one of a touch pad, a touch screen, a keypad of general key arrangement, a keypad of qwerty mode, a function key which is set up to perform a specific function, or a combination thereof. In the exemplary embodiment where the portable terminal of the present invention is a terminal which operates by only a touch screen, the configuration of the input unit 1310 can be omitted.

The display unit 1330 displays screen data which are generated during the performance of the function of the portable terminal. The display unit 1330 displays status information, such as the input event of a user, the manipulation and the key manipulation, and also displays function setting information of the portable terminal.

The display unit 1330 outputs the tray and the idle screen configured by at least one widget, and visually displays a different signal and color information outputted from the controller 1370. The display unit 1330 can use a liquid crystal display (LCD), and in this exemplary embodiment, the display unit 1330 can include a LCD controller, memory which can store an image, and an LCD display device.

The display unit 1330 can be formed of the touch screen according to the offer type of the portable terminal. If a user generates an input event (an event of touch, drag, tap, and flick) through an object such as a finger or a pen, the touch screen display supports a screen mounting a special input unit which receives the position of the input event.

That is, if an input event of a user is generated in the widget shown on the screen or at a specific position of the user interface, without using a keypad, the portable terminal determines the position to perform a specific processing by stored software. The touch screen is a display device which directly receives input information.

The touch screen operates the input function by adding a device which is a touch panel to the display unit 1330 of the portable terminal. In the touch panel, an infrared ray which is not seen flows toward up and down, left and right and numerous rectangular lattices are generated in a screen, so that the position can be determined when the input event is generated in the lattice by the fingertips or other object of a user.

Thus, if an input event is generated in data (a widget, a widget icon, a widget set icon, an image, a user interface) displayed on the screen mounting the touch panel in advance, the controller 1370 can determine an item that the user selected according to the position of the screen in which the input event is generated, and can process a pertinent command. Through such an interface, the user quite easily can get the information that he wants.

For example, if a user generates the input event in a given area set up in advance by using a finger or a pen, the controller 1370 recognizes the pertinent position information. The controller 1370 performs the function of imposing and outputting an effect according to an input event of data displayed on the display unit 1330 corresponding to the input event. Moreover, the controller 1370 processes the idle screen currently displayed on the display unit 1330 corresponding to the input event as a background, and outputs a new idle screen which is configured by the widget set.

That is, the display unit 1330 receives a control signal according to the function execution of the portable terminal through the touch screen and sends the control signal to the controller 1370. The configuration and operation of the display unit 1330 using this touch screen correspond to the exemplary embodiments described above with reference to FIG 1A to FIG. 12.

The memory 1350 can be configured of ROM (Read Only Memory) and RAM (Random Access Memory). The memory 1350 can store various data which are generated and utilized in the portable terminal according to an exemplary embodiment. The various data includes data generated according to the application execution of the portable terminal and all types of user data which are generated by using the portable terminal or received from outside to be stored. The data and user data can include a widget, a widget icon, a widget set, and a widget set icon defined in the exemplary embodiments.

Additionally, the various data can include a user interface provided by the portable terminal and setup information (widget set information, idle screen information) according to the use of the portable terminal.

Particularly, the memory 1350 can store the setup information relating to the widget set function according to an exemplary embodiment of the present invention. As described above, this setup information can be widget set information and idle screen information, and this setup information can be stored in a setup information storage area 1355. This setup information can be stored in a form like the above-described Table 1.

The memory 1350 can store an application program for controlling the general operation of the portable terminal and an application program for controlling the operation of the idle screen configuration by a widget set.

Such applications programs can include an application program corresponding to the operation of the exemplary embodiments described above with reference to FIG 1A to FIG. 12. These applications programs can be stored in an application storage area (not shown) of the memory 1350.

Moreover, the memory 1350 can include one or more buffers which temporarily stores data generated during the above-described application execution. Moreover, the memory 1350 can be configured inside the portable terminal, and also can be configured outside like a smart card, while it should be noted that the memory 1350 can include all storage medium of the inside and outside type. The controller 1370 performs the overall control function of the portable terminal, and controls signal flows between the blocks within the portable terminal. The controller 1370 controls signal flows between each configuration such as the input unit 1310, the display unit 1330 and the memory 1350.

The controller 1370 can include a data processing unit configured of a codec for the mobile communications service of the portable terminal and at least one modem. At this time, as described above, when the portable terminal supports a mobile communications service, the portable terminal can additionally include a wireless communications module for the radio frequency (RF) signal processing.

Particularly, when the widget set is fetched, the controller 1370 controls to configure the idle screen with reference to the widget set information according to the widget set. Additionally, when the use exit of the widget set is requested, the controller 1370 controls to restore the idle screen configuration according to the widget set of the previous idle screen.

The controller 1370 controls to extract the widget set information corresponding to a corresponding widget set in the widget set activation, fetch a widget according to widget information of the widget set information, and arrange the fetched widget to the idle screen according to position information of the widget set information. The controller 1370 processes the widget configuration changes made in the idle screen according to the widget set and the widget set information update according to any configuration change.

The controller 1370 can control the operation of the exemplary embodiments described above with reference to FIG 1A to FIG. 12. The controller 1370 can implement the above-described function control by software, so that the operation of the invention can be processed. The controller 1370 can include a widget set administration unit 1375 for the processing of the movement of the widgets, widget sets and associated icons according to the exemplary embodiments.

The widget set administration unit 1375 may also manage the overall processing according to the idle screen configured by the widget set of the exemplary embodiments. The widget set administration unit 1375 processes the activation/deactivation of the widget set, fetches the configuration widget of the idle screen according to the activation/deactivation of the widget set, and arranges the fetched widget to the idle screen.

The widget set administration unit 1375 fetches the widget configured in the widget set with reference to the widget set information in the activation of widget set, and moves and arranges the fetched widget to a designated position of the idle screen according to the widget set information. The widget set administration unit 1375 checks the configuration change of the widget generated in the idle screen by the widget set, and updates the widget information and position information of the widget corresponding to the configuration change, into the widget set information of the widget set, when sensing the configuration change of the widget.

The widget set administration unit 1375 fetches the configuration widget of the previous idle screen with reference to the idle screen information in the deactivation of the widget set, moves and arranges the fetched widget to a designated position of the idle screen according to the idle screen information. The operation of this widget set administration unit 1375 corresponds to the exemplary embodiments described above with reference to FIG 1A to FIG. 12, and also corresponds to the control operation of the controller 1370. In the meantime, in FIG. 13, for the sake of convenience in illustration, an example schematic configuration of the portable terminal is shown. However, the portable terminal of the present invention is not restricted to the above-described configuration.

Therefore, according to the offer type, the portable terminal of the present invention can additionally include configurations which are not mentioned in the above such as a digital broadcast reception module, a local area network module, an internet communications module and a music replay module or the like. Moreover, when the portable terminal according to exemplary embodiments of the present invention supports a mobile communications service, a communications module for providing the mobile communications service of the portable terminal can be included. The communications module can include a codec and a modem.

Moreover, the portable terminal of the present invention can exclude specific blocks out of the above described configuration or blocks can be replaced with other blocks according to the offer type. This can be easily understood for a person skilled in the art. For example, when the portable terminal of the present invention supports a local area wireless communications such as Bluetooth ® or Zigbee ® or the like, a local area network module for this communication can be included. The local area network module can perform local area wireless communications with other portable terminals under the control of the controller 1370.

Moreover, when the portable terminal according to exemplary embodiments of the present invention supports communications using an internet network, the portable terminal of the present invention can include an internet module, such that the internet module can perform wireless communications with other portable terminals and networks through the internet network under the control of the controller 1370. Moreover, when providing a function related to digital broadcasting, the portable terminal of the present invention can include a broadcasting reception module for such a function.

As described above, the present invention can be implemented in a portable terminal, but not necessarily limited to a portable terminal. In other words, the present invention having a display unit can be applied to all types of display device as well. As an example of the above display device, TV, LFD (Large Format Display), DS (Digital Signage) can be included. The display unit configuring TV or LFD can include a variety of display devices such as LCD, PDP (Plasma Display Panel), and OLED (Organic Light Emitting Diodes).

In addition, the present invention is implemented in the above display device, an input unit can be implemented with a touch pad, a touch screen or the like as well as with a remote control. Here, the remote control can recognize the user's button input while being equipped with a keypad, or can recognize a motion or pointing operation while being equipped with gyro sensors, acceleration sensors, IRLED, and image sensors.

A display device according to an exemplary embodiment of the present invention can be configured of a configuration corresponding to elements of the portable terminal. That is, the display device includes: a display unit configured to provide a screen area comprising a widget according to a widget set in an activation of a widget set; a memory configured to store widget set information corresponding to the widget set; and a controller configured to fetch the widget configured in the widget set in the activation of the widget set corresponding to user's request, and to arrange the fetched widget on the screen area. At this time, the controller extracts widget set information corresponding to the widget set in the activation of the widget set. Here, the widget set information comprises widget information for at least one widget and position information of a position where the at least one widget is placed on the screen area of display device. Detailed operations of each element of such a display device can correspond to a configuration of the portable terminal and to a description of operation.

In addition, a method of configuring a screen of a display device can correspond to a method of configuring a idle screen of the portable terminal. That is, the method of configuring a screen of a display device includes: activating a widget set in response to user's request; fetching a widget configured in the widget set in an activation of the widget set; and arranging the fetched widget in a screen of the display device. At this time, the display device can further include extracting widget set information corresponding to the widget set in the activation of the widget set. Here, the widget set information includes widget information for at least one widget and position information of a position where the at least one widget is placed on the screen of display device. Detailed operations of each element of such a process can be comprised of operations corresponding to exemplary operations configuring a idle screen in the portable terminal.

As described above, according to a method and apparatus for configuring a idle screen of a portable terminal according to the exemplary embodiments of the present invention, the space restriction of the idle screen of the portable terminal to arranging the widget can be overcome. That is, the space restriction of the idle screen to arranging the widget can be overcome. Moreover, the idle screen of the portable terminal including the widget can be more readily configured based on one or more preset widget related group information.

According to exemplary embodiments of the present invention, the idle screen of the portable terminal according to the portable terminal use circumstance of the user can be configured more readily based on the widget related group information. Additionally, a user can intuitively and conveniently edit, set up, and fetch the widget of a idle screen of the portable terminal. Additional editing and storage procedures for the idle screen configuration of the portable terminal can be omitted.

According to exemplary embodiments of the present invention, a screen of display device comprising a widget can be easily configured, based on at least one widget related group information which is previously set up.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method of configuring a idle screen of a display device, the method comprising:
activating a widget set in response to a user request;
fetching a widget configured in the widget set in an activation of the widget set; and
configuring the idle screen by the fetched widget.

2. The method of claim 1, wherein fetching a widget comprises:
extracting widget set information corresponding to the widget set in the activation of the widget set; and
fetching at least one widget configuring the widget set with reference to the widget set information.

3. The method of claim 2, wherein the widget set information comprises widget information for at least one widget that is set up in the widget set in the form of a macro and position information of a position where the at least one widget is placed on the idle screen,
wherein configuring the idle screen comprises fetching a widget based on the widget information, and arranging the fetched widget after moving to a designated position of the idle screen according to the position information.

4. The method of claim 1, wherein, in configuring the idle screen by the widget set, an effect denoting the active state of the widget set is outputted.

5. The method of claim 1, further comprising:
converting into the idle screen configured by a widget prior to the activation of the widget set in the deactivation of the widget set;
removing an effect denoting a state of the widget set when converting into the idle screen configured by the previous widget.

6. The method of claim 1, further comprising:
sensing a configuration change of the widget of the idle screen in the activated widget set; and
changing widget set information based on an information about the widget corresponding to the configuration change, wherein the information comprises a widget information and position information corresponding to the widget having the changed configuration.

7. The method of claim 6, wherein changing the widget set information comprises setting up a macro according to the widget information and the position information of the widget having the changed configuration to the widget set information.

8. The method of claim 1, wherein the widget set comprises a group of widgets configuring the idle screen according to a usage mode of the display device.

9. A display device, comprising:
a display unit to provide a first idle screen, and to provide a second idle screen configured by a widget according to a widget set in an activation of the widget set;
a memory to store widget set information corresponding to the widget set; and
a controller to fetch the widget configured in the widget set in the activation of the widget set, and to arrange the fetched widget on the second idle screen.

10. The display device of claim 9, wherein the controller generates a widget set layer, which is the second idle screen, on the first idle screen, in the activation of the widget set,
fetches at least one widget configured in the widget set by using widget set information corresponding to the widget set, and arranges the fetched widget on the widget set layer, which is the second idle screen.

11. The display device of claim 10, wherein the widget set information comprises widget information for at least one widget that is set up in the widget set in the form of a macro and position information of a position where the at least one widget is placed in the second idle screen,
wherein the controller fetches the widget based on the widget information; and arranges the fetched widget after moving it to a designated position on the second idle screen according to position information.

12. The display device of claim 10, wherein the controller outputs an effect informing a user of the active state of the widget set when configuring the second idle screen by the widget set, the controller converts into the first idle screen in a deactivation of the widget set to provide a widget that is configured in the first idle screen, and the controller removes the effect informing the user of the activation state of the widget set.

13. The display device of claim 10, wherein the controller sets up a macro according to a widget information and a position information of a widget having a changed configuration to the widget set information, in response to sensing a corresponding configuration change of the widget of the second idle screen.

14. The display device of claim 10, wherein the controller comprises a widget set administration unit to process the activation/deactivation of the widget set; to fetch the configuration widget of the second idle screen according to the activation/deactivation of the widget set; and to arrange the fetched widget on the second idle screen,
wherein the widget set administration unit checks a configuration change of a widget generated in the second idle screen by the widget set, and updates widget information and position information of a widget corresponding to the configuration change into widget set information of the widget set in response to sensing the configuration change of the widget.

15. The display device of claim 14, wherein the widget set administration unit fetches a widget configured in the widget set with reference to widget set information in an activation of the widget set, arranges the fetched widget after moving it to a designated position of the second idle screen according to the widget set information; and
fetches a configuration widget of the first idle screen with reference to the first idle screen information in the deactivation of the widget set, and arranges the fetched widget after moving it to a designated position of the first idle screen according to the first idle screen information.
